(19) Europäisches Patentamt
European Patent Office
Office européen des brevets

(11) EP 1 833 905 B1

(12) **FASCICULE DE BREVET EUROPEEN**

(45) Date de publication et mention de la délivrance du brevet:
**07.08.2013 Bulletin 2013/32**

(21) Numéro de dépôt: **05825564.7**

(22) Date de dépôt: **30.12.2005**

(51) Int Cl.:
***C08L 21/00*** *(2006.01)* ***C08L 25/00*** *(2006.01)*
***B60C 1/00*** *(2006.01)*

(86) Numéro de dépôt international:
**PCT/EP2005/014135**

(87) Numéro de publication internationale:
**WO 2006/069793 (06.07.2006 Gazette 2006/27)**

(54) **COMPOSITION ELASTOMERIQUE RENFORCEE D'UNE CHARGE DE POLYVINYLAROMATIQUE FONCTIONNALISE**

KAUTSCHUKZUSAMMENSETZUNG MIT FUNKTIONALISIERTEM POLYVINYLAROMATISCHEM POLYMER ALS VERSTÄRKENDEM FÜLLSTOFF

ELASTOMER COMPOSITION WHICH IS REINFORCED WITH A FUNCTIONALISED POLYVINYLAROMATIC FILLER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **31.12.2004 FR 0414126**

(43) Date de publication de la demande:
**19.09.2007 Bulletin 2007/38**

(73) Titulaires:
- **COMPAGNIE GENERALE DES ETABLISSEMENTS MICHELIN**
  **63000 Clermont-Ferrand (FR)**
- **Michelin Recherche et Technique S.A.**
  **1763 Granges-Paccot (CH)**

(72) Inventeurs:
- **LAPRA, Arnaud**
  **63450 Saint Saturnin (FR)**
- **GANDON-PAIN, Sylvie**
  **F-63100 Clermont-Ferrand (FR)**
- **VARAGNIAT, Franck**
  **F-63122 Ceyrat (FR)**

(74) Mandataire: **Le Cam, Véronique Marie Christine**
**M.F.P. Michelin,**
**SGD/LG/PI,**
**F35,**
**Ladoux**
**63040 Clermont-Ferrand-Cedex 9 (FR)**

(56) Documents cités:
**WO-A-01/72885**
**FR-A- 2 384 817**
**US-B1- 6 207 757**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 833 905 B1

## Description

La présente invention est relative aux compositions d'élastomères diéniques utilisables notamment pour la fabrication de pneumatiques ou de produits seini-finis pour pneumatiques, par exemple de bandes de roulement de ces pneumatiques.

Elle est également relative aux charges renforçantes susceptibles de renforcer de telles compositions de caoutchouc, plus particulièrement aux charges renforçantes de type organique ou polymérique, ainsi qu'à leur utilisation pour renforcer de telles compositions de caoutchouc.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé, ainsi qu'une bonne résistance à l'usure. Une solution efficace à ce problème a été trouvée, au cours des quinze dernières années, grâce à la mise au point de nouvelles compositions de caoutchouc comportant des charges du type inorganiques, véritablement renforçantes, encore connues sous le nom de *"non-black fillers",* tout particulièrement des silices hautement dispersibles (HDS pour *"Highly Dispersible Silica"*), qui se sont révélées capables de remplacer dans leur fonction de charge renforçante les noirs de carbone conventionnels pour pneumatiques.

Toutefois, ces charges inorganiques renforçantes, en raison d'une densité légèrement supérieure pour un pouvoir renforçant équivalent, présentent l'inconvénient connu d'augmenter le poids des compositions et des articles en caoutchouc en dérivant, comparativement à l'emploi de noir de carbone, ce qui est plutôt antinomique d'un autre objectif plus général qui est celui d'allègement des pneumatiques et donc des véhicules les comportant.

Poursuivant leurs recherches, les Demanderesses ont découvert qu'il existe certaines charges organiques de synthèse qui peuvent être utilisées dans ces compositions comme de véritables charges renforçantes, c'est-à-dire capables de remplacer des noirs de carbone conventionnels pour pneumatiques tout comme des silices HDS.

Ces charges organiques de synthèse, grâce à une densité environ deux fois moindre, permettent de réduire de manière très significative le poids des compositions et celui des articles en caoutchouc les contenant, ceci sans compromis sur les propriétés d'usage des pneumatiques.

En conséquence, un premier objet de l'invention concerne une composition de caoutchouc à base d'au moins un élastomère diénique, une charge polymère, un agent de couplage assurant la liaison entre la charge polymère et l'élastomère, caractérisée en ce que ladite charge polymère comporte des nanoparticules de polyvinylaromatique (ci-après en abrégé "PVAr") porteur d'une fonction notée "Z" de formule $\equiv$ Si - X, X représentant un groupe hydroxyle ou hydrolysable.

L'invention a également pour objet un masterbatch à base d'au moins un élastomère diénique et une charge polymère comportant des nanoparticules du PVAr fonctionnalisé Z ci-dessus.

L'invention a également pour un objet un procédé d'obtention d'un masterbatch comportant les étapes suivantes :

- partir d'un latex de l'élastomère diénique et d'un latex de la charge polymère ;
- les mélanger intimement ;
- faire précipiter le mélange ainsi obtenu ;
- puis laver et sécher le précipité ainsi obtenu,

ce procédé étant caractérisé en ce que ladite charge polymère comporte des nanoparticules du PVAr fonctionnalisé Z ci-dessus.

L'invention a également pour objet l'utilisation d'un masterbatch selon l'invention pour la fabrication d'une composition d'élastomère diénique.

L'invention a également pour objet un procédé d'obtention d'une composition de caoutchouc dans lequel on incorpore à au moins un élastomère diénique, au moins une charge polymère et un agent de couplage assurant la liaison entre ladite charge et l'élastomère, et en ce qu'on malaxe thermomécaniquement le tout, en une ou plusieurs étapes, jusqu'à atteindre une température maximale comprise entre 110°C et 190°C, ce procédé étant caractérisé en ce que ladite charge polymère comporte des nanoparticules du PVAr fonctionnalisé Z. De manière toute préférentielle, pour faciliter leur incorporation à la composition de l'invention, les nanoparticules de PVAr sont incorporées à la composition sous la forme du masterbatch de l'invention.

L'invention a également pour objet l'utilisation d'une composition conforme à l'invention pour la fabrication d'articles finis ou produits semi-finis en caoutchouc, ainsi que ces articles finis et produits semi-finis eux-mêmes, comportant une composition de caoutchouc conforme à l'invention, ces articles ou produits étant notamment destinés à tout système de liaison au sol des véhicules automobiles, tels que pneumatiques, appuis internes de sécurité pour pneumatiques, roues, ressorts en caoutchouc, articulations élastomériques, autres éléments de suspension et anti-vibratoire.

L'invention a tout particulièrement pour objet l'utilisation d'une composition de caoutchouc conforme à l'invention

pour la fabrication de pneumatiques ou de produits semi-finis pour pneumatiques choisis notamment dans le groupe constitué par les bandes de roulement, les sous-couches destinées par exemple à être placées sous ces bandes de roulement, les nappes d'armature de sommet, les flancs, les nappes d'armature de carcasse, les talons, les protecteurs, les chambres à air, les gommes intérieures étanches pour pneu sans chambre, les gommes internes de renforcement de flancs et autres gommes destinées à supporter la charge en cas de roulage à plat des pneumatiques.

La composition conforme à l'invention est particulièrement adaptée à la fabrication de pneumatiques destinés à équiper des véhicules de tourisme, camionnettes, véhicules 4x4 (à 4 roues motrices), SUV (*"Sport Utility Vehicles"*), deux roues, "Poids-lourds" (c'est-à-dire métro, bus, engins de transport routier (camions, tracteurs, remorques), véhicules hors-la-route), avions, engins de génie civil, agraire, ou de manutention.

L'invention ainsi que ses avantages seront aisément compris à la lumière de la description et des exemples de réalisation qui suivent, ainsi que des figures relatives à ces exemples qui représentent:

- un cliché de microscopie électronique (MET) réalisé sur un échantillon de charge PVAr en émulsion aqueuse (Fig. 1) ;
- un cliché de MET réalisé sur un échantillon de composition de caoutchouc conforme à l'invention, renforcée par cette charge PVAr (Fig. 2) ;
- des courbes de variation de module en fonction de l'allongement pour différentes compositions de caoutchouc, conformes ou non à l'invention (Fig. 3 à Fig. 5).

## <u>I. MESURES ET TESTS UTILISES</u>

### <u>I-1. Caractérisation de la charge polymère PVAr</u>

La charge de polymère PVAr décrite ci-après consiste en des "nanoparticules", c'est-à-dire des particules dont la dimension principale (diamètre ou longueur) est typiquement inférieure au micromètre, généralement comprise dans un intervalle de l'ordre d'une dizaine de nanomètres à une centaine ou quelques centaines de nanomètres.

Ces nanoparticules se présentent sous forme de particules élémentaires (ou "particules primaires"), ces particules élémentaires ou nanoparticules pouvant former des agrégats (ou "particules secondaires") d'au moins deux de ces nanoparticules, nanoparticules et/ou agrégats pouvant éventuellement former à leur tour des agglomérats susceptibles de se désagglomérer en ces nanoparticules et/ou agrégats sous l'effet d'une force externe, par exemple sous l'action d'un travail mécanique.

Cette charge polymère est caractérisée au microscope électronique à transmission (MET), comme indiqué ci-après.

A) <u>Caractérisation en émulsion (latex):</u>

Le latex de charge PVAr, au préalable dilué à l'eau (par exemple à 8 g de charge par litre d'eau) est dilué environ 50 fois dans l'isopropanol. 40 ml de la solution ainsi obtenus sont versés dans un bécher de forme haute (50 ml), puis dispersés à l'aide d'une sonde ultrasons de 600 W (sonde Vibracells, référence 72412, commercialisée par Bioblock Scientific), sous une puissance de 100%, pendant 8 min en mode pulsé (1s ON/ 1s OFF). Une goutte de la solution ainsi obtenue est alors déposée sur une grille de microscopie en cuivre à membrane de carbone, puis observée sous MET ("CM 200" commercialisé par FEI, tension d'accélération de 200 kV) équipé d'une caméra (caméra MegaView II commercialisée par Soft Imaging System) et d'un système d'analyse d'image (AnalySIS Pro A version 3.0 de Soft Imaging System).

Les conditions de réglage du MET sont optimisées de manière connue, en fonction de l'échantillon et de l'état de vieillissement du filament (typiquement, diaphragme condenseur 2 (50 μm de diamètre) - objectif 3 (40 μm de diamètre)). Le taux de grandissement du microscope est adapté pour avoir une résolution suffisante sur les nanoparticules. Par exemple, un grandissement de 65000 correspond à une résolution voisine de 0,96 nm/pixel, sur une image numérique de 1248x1024 pixels ; une telle résolution permet par exemple la définition d'une nanoparticule sphérique de 40 nm de diamètre avec plus de 1000 pixels. La calibration de la caméra est réalisée de manière conventionnelle à l'aide d'étalons (à faible grandissement, réseau en or de 2160 lignes/mm ; à fort grandissement, billes d'or de diamètre 0,235 nm).

Le diamètre des nanoparticules est mesuré à l'aide du logiciel AnalySIS Pro A version 3.0 (avec option "Cercle" du menu "Mesure"). Pour chaque image et pour une nanoparticule donnée, l'opérateur matérialise à l'écran (à l'aide de la souris) trois points situés en périphérie de l'image de la nanoparticule. Le logiciel trace alors automatiquement le cercle qui passe par ces trois points et stocke dans un fichier (Excel) les valeurs de l'aire circulaire, du périmètre circulaire et du diamètre circulaire de la nanoparticule. Cette opération n'étant possible que pour les nanoparticules dont les contours sont bien délimités, sont exclues de la mesure les nanoparticules présentes dans des agglomérats. L'expérience est répétée au minimum sur 2000 nanoparticules représentatives de l'échantillon (issues d'au moins 10 images différentes, typiquement 50).

B) Caractérisation en composition de caoutchouc:

Les échantillons de charge PVAr, en composition de caoutchouc vulcanisée, sont préparés de manière connue par ultracryomicrotomie (voir par exemple L. Sawyer and D. Grubb, *Polymer Microscopy,* p. 92, Chapman and Hall).

L'appareil utilisé ici est un ultracryomicrotome Leica ("EMFCS") équipé d'un couteau diamant. L'échantillon est découpé sous la forme d'une pyramide tronquée à base rectangulaire, la face tronquée à partir de laquelle seront réalisées les coupes mesurant moins de 600 $\mu$m de côté. Cette pyramide tronquée est maintenue fermement pendant la découpe. L'échantillon est refroidi à une température adaptée (proche de la température de transition vitreuse de l'échantillon) pour qu'il soit suffisamment dur pour permettre la coupe, la température du couteau étant typiquement voisine de celle de l'échantillon. La vitesse et l'épaisseur de coupe (telles qu'affichées par l'appareillage) sont préférentiellement comprises entre 1 et 2 mm/s et entre 20 et 30 nm, respectivement. A l'aide d'une goutte de solution aqueuse de saccharose (40 g dans 40 mL d'eau), les coupes sont récupérées dans l'enceinte de l'ultracryomicrotome puis déposées sur une grille de MET, à température ambiante. Le saccharose est ensuite éliminé en déposant la grille à la surface d'un cristallisoir rempli d'eau distillée.

Les coupes sont observées sur microscope CM 200 (tension 200 kV). Pour optimiser le contraste, les observations sont réalisées en imagerie filtrée en énergie classique (fenêtre en énergie $\Delta$E égale à environ 15 eV), avec un système d'imagerie GIF (Gatan Imaging Filter) et les logiciels associés (Filter Control et Digital Micrograph 3.4).

I-2. Caractérisation des compositions de caoutchouc

Les compositions de caoutchouc sont caractérisées, avant et après cuisson, comme indiqué ci-après.

A) Essais de traction

Ces essais permettent de déterminer les contraintes d'élasticité et les propriétés à la rupture après cuisson. Sauf indication différente, ils sont effectués conformément à la norme française NF T 46-002 de septembre 1988. On mesure en première élongation (i.e., sans cycle d'accommodation) les modules sécants vrais (i.e., calculés en se ramenant à la section réelle de l'éprouvette), exprimés en MPa, à 100% d'allongement (modules notés M100), à 300% d'allongement (M300), 400% d'allongement (M400) voire 600% d'allongement (M600).

On mesure également les contraintes (en MPa) et les allongements à la rupture (en %). Toutes ces mesures de traction sont effectuées dans les conditions normales de température et d'hygrométrie (23 $\pm$ 2°C ; 50 $\pm$ 5% d'humidité relative).

Un traitement des enregistrements de traction permet également de tracer la courbe de module en fonction de l'allongement (voir Fig. 3 à Fig. 5 annexées), le module utilisé ici étant le module sécant vrai mesuré en première élongation.

B) Rhéométrie :

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983). Ti (en min) est le délai d'induction, c'est-à-dire le temps nécessaire au début de la réaction de vulcanisation. On mesure également la constante de vitesse de conversion K (en $min^{-1}$) d'ordre 1, calculée entre 30% et 80% de conversion, qui permet d'apprécier la cinétique de vulcanisation (plus K est élevée, plus la cinétique est rapide).

C Propriétés dynamiques :

Les propriétés dynamiques $\Delta G^*$ et $\tan(\delta)_{max}$ sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation crête-crête de 0,1 à 50% (cycle aller), puis de 50% à 0,1 % (cycle retour). Les résultats exploités sont le module complexe de cisaillement dynamique (G*) et le facteur de perte tan $\delta$. Pour le cycle retour, on indique la valeur maximale de tan $\delta$ observée ($\tan(\delta)_{max}$), ainsi que l'écart de module complexe ($\Delta G^*$) entre les valeurs à 0,1 et 50% de déformation (effet-Payne).

## II. DESCRIPTION DETAILLEE DE L'INVENTION

Les compositions de caoutchouc selon l'invention sont à base d'au moins les constituants suivants : un (c'est-à-dire au moins un) élastomère diénique, une (au moins une) charge polymère à titre de charge renforçante et un (au moins un) agent de couplage assurant la liaison entre cette charge polymère et cet élastomère diénique, ladite charge polymère comportant des nanoparticules de PVAr telles que décrites en détail ci-après.

Bien entendu, par l'expression "à base de", il faut entendre une composition comportant le mélange et/ou le produit de réaction des différents constituants de base utilisés, certains de ces constituants pouvant réagir et/ou étant destinés à réagir entre eux, au moins partiellement, lors des différentes phases de fabrication de la composition, ou lors de sa cuisson ultérieure. Cette définition s'applique également au masterbatch de l'invention.

Dans la présente description, sauf indication expresse différente, tous les pourcentages (%) indiqués sont des % en masse.

### II-1. Elastomère diénique

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend par "essentiellement insaturé" un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention :

(a) tout homopolymère obtenu par polymérisation d'un monomère diène conjugué ayant de 4 à 12 atomes de carbone ;

(b) tout copolymère obtenu par copolymérisation d'un ou plusieurs diènes conjugués entre eux ou avec un ou plusieurs composés vinyle aromatique ayant de 8 à 20 atomes de carbone ;

(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène ;

(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en $C_1$-$C_5$)-1,3-butadiènes tels que par exemple le 2.3-diméthyl-1,3-butadiène, le 2,3-diéthyl-1,3-butadiène, le 2-méthyl-3-éthyl-1,3-butadiène, le 2-méthyl-3-isopropyl-1,3-butadiène; un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion (notamment émulsion) ou en solution ; ils peuvent être couplés et/ou

étoilés ou encore fonctionnalisés avec un agent de couplage et/ou d'étoilage ou de fonctionnalisation.

Conviennent les polybutadiènes et en particulier ceux ayant une teneur en unités -1.2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65%, une teneur en liaisons trans-1,4 comprise entre 20% et 80%, les copolymères de butadiène-isoprène et notamment ceux ayant une teneur en isoprène comprise entre 5% et 90% en poids et.une température de transition vitreuse (Tg, mesurée selon ASTM D3418) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités-1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (c'est-à-dire pour plus de 50 pce) un SBR, qu'il s'agisse d'un SBR préparé en émulsion ("E-SBR") ou d'un SBR préparé en solution ("S-SBR"), ou un coupage (mélange) SBR/BR, SBR/NR (ou SBR/IR), ou encore BR/NR (ou BR/IR).

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'annature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

II-2. Charge polymère PVAr

La charge polymérique renforçante des compositions de l'invention a pour caractéristique essentielle de comporter des nanoparticules d'un polyvinylaromatique (PVAr) fonctionnalisé, porteur d'une (au moins une) fonction notée "Z" de formule (I) :

$$\equiv Si-X,$$

dans laquelle Si représente un atome de silicium et X représente un groupe hydroxyle ou un groupe monovalent hydrolysable.

L'homme de métier comprendra aisément à la lecture de cette formule (I) qu'il existe au moins un et au plus trois groupe(s) X, hydroxyle ou groupe(s) monovalent(s) hydrolysable(s), relié(s) au PVAr via l'atome de silicium tétravalent.

Par "polyvinylaromatique" (en abrégé "PVAr"), on entend dans la présente demande, par définition :

- tout homopolymère de composé vinylaromatique (soit par définition tout monomère vinylique substitué en alpha par un groupe aromatique), ou
- tout copolymère dont au moins la fraction pondérale majoritaire (de préférence au moins égale ou supérieure à 50%, plus préférentiellement égale ou supérieure à 70%) comporte des motifs vinylaromatique, la fraction minoritaire (de préférence inférieure à 50%, plus préférentiellement inférieure à 30%) pouvant être issue(s) de monomère(s) d'une autre nature.

A titre de composé vinylaromatique convient particulièrement tout composé styrénique (par définition tout monomère comportant le radical styryle) tel que par exemple styrène, 2-méthylstyrène, 3-méthylstyrène, 4-méthylstyrène, alpha-méthylstyrène, 2,4-diméthylstyrène. 2,4-diisopropylstyrène, 4-ter-butylstyrène, méthoxystyrène, ter-butoxystyrène, chlorostyrène, chlorométhylstyrène. Comme autres exemples préférentiels de composé styrénique peuvent être cités l'éthylvinylbenzène (ci-après, en abrégé "EVB") le divinylbenzène ("DVB") et leurs différents isomères.

De préférence, dans la formule (I) ci-dessus, X est un halogène, notamment le chlore, ou X répond à la formule OR dans laquelle O est l'oxygène et R représente l'hydrogène ou un groupe hydrocarboné monovalent, linéaire ou ramifié, comportant de préférence de 1 à 15 atomes de carbone.

Conviennent plus particulièrement des fonctions Z choisies parmi les fonctions dites "hydroxysilyle" (≡Si-OH) ou "alkoxysilyle" (≡Si-OR'), R' étant un radical hydrocarboné comportant de préférence de 1 à 15 atomes de carbone, plus préférentiellement choisi parmi les alkyles, alkoxyalkyles, cycloalkyles et aryles, en particulier parmi les alkyles en $C_1$-$C_8$, les alkoxyalkyles en $C_2$-$C_8$, les cycloalkyles en $C_5$-$C_{10}$ et les aryles en $C_6$-$C_{12}$.

Selon un mode de réalisation particulier préféré de l'invention, Z répond à l'une des formules ci-après :

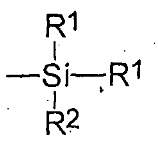 ; 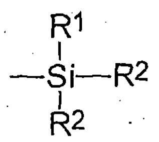 ; 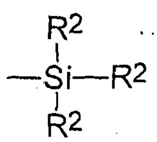 ,

dans lesquelles :

- les radicaux $R^1$, substitués ou non substitués, identiques ou différents entre eux, sont choisis dans le groupe constitué par les alkyles en $C_1$-$C_8$, les cycloalkyles en $C_5$-$C_8$ et les aryles en $C_6$-$C_{12}$ ;
- les radicaux $R^2$, substitués ou non substitués, identiques ou différents entre eux, sont choisis dans le groupe constitué par l'hydroxyle, les alkoxyles en $C_1$-$C_8$ et les cycloalkoxyles en $C_5$-$C_8$.

Plus préférentiellement, dans ces relations :

- les radicaux $R^1$ sont choisis dans le groupe constitué par les alkyles en $C_1$-$C_4$, cyclohexyle et phényle, notamment parmi les alkyles en $C_1$-$C_4$, plus particulièrement parmi méthyle et méthyle ;
- les radicaux $R^2$ sont choisis dans le groupe constitué par l'hydroxyle et les alkoxyles en $C_1$-$C_6$, notamment parmi l'hydroxyle et les alkoxyles en $C_1$-$C_4$, plus particulièrement parmi hydroxyle, méthoxyle et éthoxyle.

Plus préférentiellement encore, les radicaux $R^1$ sont choisis parmi méthyle et éthyle et les radicaux $R^2$ sont choisis parmi hydroxyle, méthoxyle et éthoxyle.

De préférence, le PVAr est un homopolymère styrénique, notamment un polystyrène, ou un copolymère issu de motifs styréniques selon une fraction pondérale majoritaire (de préférence au moins égale ou supérieure à 50%, plus préférentiellement égale ou supérieure à 70%), par exemple un homopolymère styrène, un copolymère styrène-DVB, ou styrène-EVB, ou EVB-DVB, ou styrène-EVB-DVB ; la fraction minoritaire (de préférence inférieure à 50%, plus préférentiellement inférieure à 30%) dudit copolymère pouvant comporter en outre un autre comonomère.

Pour la clarté de l'exposé sont rappelées ci-dessous, et comparées à celle du styrène, les formules développées des composés styréniques EVB et DVB :

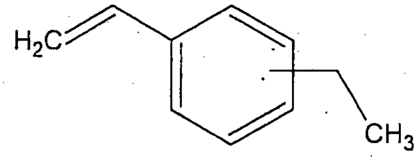

" EVB " (éthylvinylbenzène)

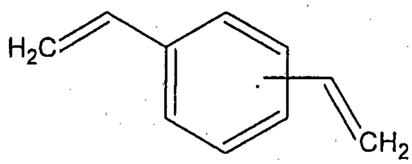

" DVB " (divinylbenzène)

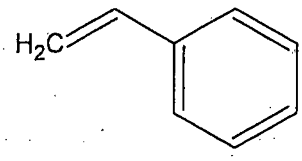

styrène

La fonctionnalisation du PVAr pourrait être effectuée sur le polymère final, par exemple par réaction sur ses doubles liaisons résiduelles.

De préférence, cette fonctionnalisation est apportée par au moins un comonomère de départ porteur de la fonction Z. En d'autres termes, le PVAr est un copolymère d'une part d'au moins un premier comonomère vinylaromatique (comonomère "A"), et d'autre part d'au moins un second comonomère fonctionnalisé porteur de la fonction Z (comonomère "B"), le taux molaire de ce second comonomère étant de préférence supérieur à 5%, notamment compris entre 5 et 30%, en particulier entre 5 et 20%.

Le comonomère A est de préférence un comonomère styrénique, plus préférentiellement choisi dans le groupe constitué par le styrène, l'EVB, le DVB et les mélanges de tels monomères.

Selon un premier mode de réalisation préférentiel, le comonomère B est choisi dans le groupe constitué par les acrylates et méthacrylates d'hydroxysilyl-alkyl($C_1$-$C_4$), les acrylates et méthacrylates d'alkoxy($C_1$-$C_4$)silyl-alkyl ($C_1$-$C_4$), et les mélanges de tels monomères. Plus préférentiellement, il est choisi dans le, groupe constitué par les acrylates et méthacrylates d'hydroxy-, de méthoxy-, d'éthoxy-silyl-alkyl($C_1$-$C_4$), et les mélanges de tels monomères, notamment parmi les acrylates et méthacrylates d'hydroxy-, de méthoxy-, d'éthoxy-silylpropyle, plus particulièrement parmi acrylate et méthacrylate de triméthoxysilylpropyle.

Selon un second mode de réalisation préférentiel, le comonomère B est choisi dans le groupe constitué par les styryl-alkyl($C_1$-$C_4$)-hydroxysilanes, les styryl-alkyl($C_1$-$C_4$)-alkoxy($C_1$-$C_4$)silanes et les mélanges de tels monomères. Plus préférentiellement, il est choisi dans le groupe constitué par les styryl-alkyl($C_1$-$C_4$)-hydroxy-, méthoxy-, éthoxy-silanes et les mélanges de tels monomères, notamment parmi les styryléthylhydroxysilanes, les styryléthylméthoxysilanes et les styryléthyléthoxysilanes ; on utilise plus particulièrement le styryléthyltriméthoxysilane (ou triméthoxysilyléthylstyrène).

Compte tenu des taux molaires préférentiels indiqués supra pour ce comonomère B porteur de la fonction Z, ce dernier est utilisé selon un taux pondéral qui est de préférence supérieur à 10%, plus préférentiellement compris entre 10 et 30%, notamment entre 15 et 30%.

Les comonomères du type B sont bien connus, notamment ceux choisis dans le groupe constitué par le méthacrylate de triméthoxysilylpropyle (en abrégé "MTSP"), l'acrylate de triméthoxysilylpropyle ("ATSP") et le triméthoxysilyléthylstyrène ("TSES") ou styryléthyl-triméthoxysilane, de formules respectives ci-après :

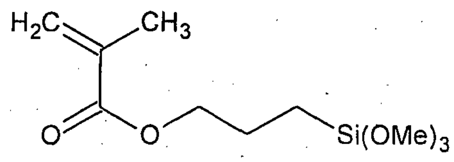

" MTSP " (méthacrylate de triméthoxysilylpropyle)

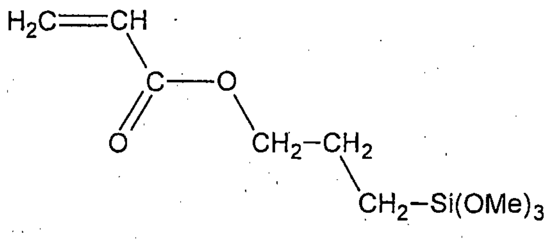

" ATSP " (acrylate de triméthoxysilylpropyle)

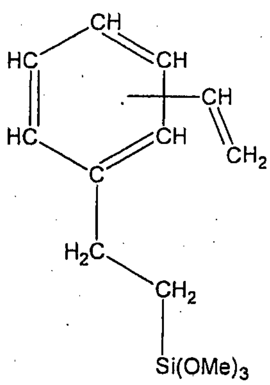

" TSES " (triméthoxysilyléthylstyrène)

Selon un autre mode de réalisation particulièrement préférentiel de l'invention, le PVAr fonctionnalisé se présente en outre dans un état réticulé, c'est-à-dire sous une forme tridimensionnelle, de manière à bien maintenir la morphologie de la charge à haute température.

Une telle réticulation pourra être apportée par tout moyen connu, par exemple à l'aide d'un post-traitement ou, selon un mode de réalisation plus préférentiel, par au moins l'un des comonomères de départ à la condition bien sûr que ce dernier soit au moins bifonctionnel, c'est-à-dire porteur d'au moins une deuxième fonction susceptible de créer un réseau tridimensionnel de PVAr lors de la polymérisation.

Ce comonomère réticulant (noté ci-après comonomère "C") est de préférence un comonomère polymérisable par réaction d'addition ; il peut être vinylaromatique (identique au ou différent du comonomère A précédemment décrit) ou non vinylaromatique.

Conviennent plus préférentiellement comme comonomère C les comonomères porteurs de deux groupes insaturés, notamment éthyléniques, polymérisables par voie radicalaire, en particulier ceux choisis dans le groupe constitué par les di(méth)acrylates de polyols, notamment de diols ou de triols (par exemple d'éthylène glycol, de propylène glycol, 1,4-butanediol, 1,6-hexanediol, triméthylolpropane), les di(méth)acrylamides d'alkylène (par exemple le bis-acrylamide de méthylène), les composés vinylaromatiques, de préférence styréniques, porteurs d'au moins deux groupements vinyliques (par exemple le diisopropenylbenzène (DIB), le divinylbenzène (DVB), le trivinylbenzène (TVB)), et les mélanges de tels comonomères.

A titre de comonomère réticulant pourrait être également utilisé le comonomère porteur de la fonction Z précitée (comonomère B), à la condition bien sûr que ce comonomère B soit au moins bifonctionnel et copolymérisable, de

préférence par voie radicalaire, avec les autres comonomères.

Le taux pondéral de comonomère réticulant est de préférence supérieur à 1%, plus préférentiellement supérieur à 5%, en particulier compris entre 10 et 30% notamment s'il s'agit d'un comonomère vinylaromatique, notamment styrénique.

Divers autres monomères, comme par exemple des monomères diéniques tels que butadiène, isoprène, pipérylène, peuvent être éventuellement ajoutés à titre minoritaire, de préférence pour moins de 20% en poids total de monomères.

Le PVAr fonctionnalisé Z peut être préparé par tout procédé de synthèse adapté à la fonctionnalisation d'un homo-ou copolymère vinylaromatique.

De préférence, une telle synthèse est conduite par polymérisation radicalaire d'un (au moins un) premier monomère vinylaromatique (comonomère A) avec un (au moins un) second comonomère (comonomère B, vinylaromatique ou non vinylaromatique), lui-même polymérisable par voie radicalaire et porteur de la fonction Z précitée, les deux comonomères A et B pouvant être avantageusement complétés, comme expliqué supra, par un (au moins un) troisième monomère (comonomère C) à fonction réticulante.

Une telle synthèse est dans son principe général bien connue, elle a été notamment appliquée à la polymérisation radicalaire en émulsion de polystyrène fonctionnalisé Z (alkoxysilane ou hydroxysilane) en présence de MTSP (voir par exemple Macromolecules 2001, 34, 5737 et Macromolecules 2002, 35, 6185), ou à la synthèse de polystyrène réticulé (mais non fonctionnalisé) en présence de DVB (Polymer 2000, 41, 481). Les polymères décrits dans ces publications sont destinés à des applications aussi variées que peintures, encres, fluides magnétiques, papier, biotechnologie ; aucune mention n'est faite d'une quelconque application comme charge renforçante, qui plus est dans une matrice d'élastomère diénique pour pneumatique.

De préférence, pour la synthèse décrite ci-dessus, le comonomère A est un monomère styrénique choisi dans le groupe constitué par le styrène, l'EVB, le DVB et les mélanges de ces monomères ; le comonomère B fonctionnalisant est choisi préférentiellement dans le groupe constitué par MTSP, ATSP, TSES et les mélanges de ces monomères ; le comonomère C réticulant éventuel est lui-même un composé styrénique choisi de préférence dans le groupe constitué par le DIB, le DVB, le TVB et les mélanges de ces monomères.

Peuvent être ainsi obtenues des nanoparticules de PVAr fonctionnalisé Z, notamment réticulé, en émulsion dans l'eau c'est-à-dire sous forme de latex (typiquement, par exemple, 100 g de polymère par litre d'eau). On rappelle que par "latex" de polymère, doit être entendu de manière connue un système de colloïde composé d'une suspension ou d'une émulsion de particules de polymère dans un milieu aqueux.

Comme reproduit à la Figure 1, ces nanoparticules de PVAr caractérisées par MET conformément au paragraphe I-1-A précédent, se présentent de préférence sous forme de particules élémentaires de forme sensiblement sphérique (donc sous forme de nanobilles), soit à l'état isolé soit en agrégats eux-mêmes éventuellement agglomérés. Le nombre de nanoparticules par agrégat est typiquement compris entre 2 et 100. Le diamètre moyen de ces nanobilles, mesurable par MET comme indiqué au paragraphe I-1-A, est de préférence compris entre 10 et 100 nm, plus préférentiellement compris entre 10 et 60 nm, notamment entre 10 et 40 nm.

Dans la composition de caoutchouc de l'invention, le taux de charge PVAr est de préférences compris entre 10 et 100 pce (rappel, pce = parties en poids pour cent parties d'élastomère). Grâce à la faible densité de cette dernière, ce taux est avantageusement compris entre 10 et 80 pce, plus préférentiellement encore compris entre 20 et 50 pce.

De préférence, la charge PVAr constitue en outre plus de 80%, plus préférentiellement plus de 90% (% en volume) de la totalité de la charge renforçante, une fraction minoritaire (de préférence moins de 20%, plus préférentiellement moins de 10% en volume) de cette totalité pouvant être constituée par une autre charge renforçante, par exemple une charge inorganique renforçante ou du noir de carbone. La charge PVAr peut avantageusement constituer la totalité de la charge renforçante.

Par charge inorganique renforçante, on entend ici une charge inorganique ou minérale, quelles que soient sa couleur et son origine (naturelle ou de synthèse), également appelée charge "blanche", charge "claire" ou encore charge "non-noire" (*"non-black filler"*) par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Comme charges inorganiques renforçantes susceptibles d'être utilisées en complément de la charge PVAr, conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titre de silices précipitées hautement dispersibles (silices HDS), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices telles que décrites dans la demande WO 03/016387. Comme exemples

d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

A la charge PVAr peut être également associé un noir de carbone, par exemple un noir du type HAF, ISAF, SAF, conventionnellement utilisé dans les pneumatiques (par exemple noirs hautement renforçants N115, N134, N234, N326, N330, N339, N347, N375, ou encore, selon les applications visées, les noirs de séries plus élevées, par exemple N660, N683, N772).

La quantité de noir de carbone présente dans la charge renforçante totale peut varier dans de larges limites, elle est de préférence inférieure à celle de la charge PVAr. Avantageusement, on peut utiliser du noir de carbone en faible ou très faible proportion, à un taux préférentiel inférieur à 10 pce, plus préférentiellement inférieur à 6 pce, par exemple entre 0 et 3 pce. Dans les intervalles indiqués, on bénéficie notamment des propriétés colorantes (agent de pigmentation noire) et anti-UV des noirs de carbone, sans pénaliser par ailleurs les performances typiques apportées par la charge polymère PVAr.

De manière préférentielle, le taux de charge renforçante totale dans les compositions de l'invention est compris dans un domaine allant de 20 à 400 pce, plus préférentiellement de 30 à 200 pce.

<u>II-3. Masterbatch de charge PVAr</u>

Selon le meilleur mode connu de réalisation de l'invention, les nanoparticules de PVAr précédemment décrites sont incorporées à la composition de caoutchouc de l'invention par l'intermédiaire d'un masterbatch, c'est-à-dire que ces particules sont préalablement mélangées avec au moins un élastomère diénique, pour faciliter leur incorporation ultérieure à la composition de caoutchouc finale.

Par "masterbatch" (ou "mélange-maître") doit être entendu de manière connue le mélange d'au moins un élastomère (plus généralement, d'un polymère) et une charge renforçante, mélange précurseur de la composition d'élastomère (ou polymère) finale, prête à l'emploi.

Ce masterbatch, comportant au moins la charge PVAr fonctionnalisé telle que décrite précédemment et un élastomère diénique (ou mélange d'élastomères diéniques) constitue un autre objet de la présente invention.

Ce masterbatch est susceptible d'être préparé par un procédé lui-même objet de l'invention, comportant les étapes suivantes :

- partir d'un latex d'élastomère diénique et d'un latex de PVAr fonctionnalisé ;
- les mélanger intimement ;
- faire précipiter le mélange ainsi obtenu ;
- puis laver et sécher le précipité ainsi obtenu.

Le latex d'élastomère diénique peut consister en un élastomère déjà disponible en émulsion (par exemple un SBR émulsion), ou en un élastomère diénique initialement en solution (par exemple un SBR solution) qui est émulsifié dans un mélange de solvant organique et d'eau, généralement au moyen d'un agent tensio-actif (le solvant organique disparaissant au moment de la coagulation ou précipitation).

L'opération de mélangeage intime des deux latex est conduite de manière à bien disperser la charge polymère dans l'élastomère diénique, homogénéiser l'ensemble pour former un mélange de latex de concentration en matière solide préférentiellement comprise entre 20 et 500 g/l, plus préférentiellement entre 50 et 350 g/l. De préférence, les deux latex de départ sont dilués à l'eau avant mélangeage (par exemple 1 volume d'eau pour 1 volume de latex).

La précipitation du mélange des deux latex peut être réalisée par tout procédé connu de l'homme du métier, par exemple par une action mécanique ou préférentiellement par l'action d'un agent coagulant.

L'agent coagulant est tout composé liquide, miscible à l'eau mais non solvant (ou mauvais solvant) de l'élastomère, par exemple une solution aqueuse saline, de préférence un alcool ou un mélange de solvants comportant au moins un alcool (par exemple alcool et eau, alcool et toluène). Plus préférentiellement, l'agent coagulant est un alcool seul tel que méthanol ou isopropanol.

La coagulation est conduite préférentiellement sous agitation, à température ambiante, dans un grand volume de coagulant ; typiquement, on utilise sensiblement le même volume d'alcool que le volume total des deux latex dilués. Au cours de cette étape, on préfère verser le mélange des deux latex sur le coagulant, et non l'inverse.

Après lavage et séchage est obtenu le masterbatch se présentant sous forme de "miettes" de caoutchouc (*"rubber crumbs"*), comportant au moins l'élastomère diénique choisi (par exemple NR ou SBR) et les nanoparticules de PVAr noyées dans la matrice d'élastomère.

Peuvent être éventuellement incorporés au masterbatch divers additifs, qu'ils soient destinés au masterbatch proprement dit (par exemple un agent de stabilisation, du noir de carbone à titre d'agent colorant et anti-UV, un plastifiant, un antioxydant, etc.) ou à la composition de caoutchouc finale (par exemple un agent de couplage) à laquelle est destiné le masterbatch.

L'élastomère du masterbatch peut être tout élastomère diénique, identique ou non à celui (ou ceux) de la matrice de caoutchouc de l'invention. Il peut être avantageux d'utiliser le même élastomère diénique et d'ajuster le taux de PVAr dans le masterbatch au taux visé final pour la composition, de manière à ne pas avoir à ajouter d'élastomère diénique ultérieurement, au cours de la fabrication de la composition de l'invention.

<u>11-4. Agent de couplage</u>

Comme toute charge inorganique renforçante telle que silice, la charge PVAr fonctionnalisé Z nécessite d'utiliser un agent de couplage (encore appelé agent de liaison) pour établir une connexion suffisante entre la surface de ses particules et l'élastomère diénique, et assurer pleinement sa fonction de charge renforçante dans les compositions de l'invention.

On rappelle qu'un agent de couplage, au moins bifonctionnel, a notamment comme formule générale simplifiée "Y-T-U", dans laquelle:

- Y représente un groupe fonctionnel (fonction "Y") qui est capable de se lier physiquement et/ou chimiquement à la charge ;
- U représente un groupe fonctionnel (fonction "U") capable de se lier physiquement et/ou chimiquement à l'élastomère diénique, par exemple par l'intermédiaire d'un atome de soufre ;
- T représente un groupe divalent permettant de relier Y et U.

Les agents de couplage ne doivent en particulier pas être confondus avec de simples agents de recouvrement qui de manière connue peuvent comporter la fonction Y active vis-à-vis de la charge mais sont dépourvus de là fonction U active vis-à-vis de l'élastomère.

Des agents de couplage (silice/élastomère diénique), d'efficacité variable, ont été décrits dans un très grand nombre de documents et sont bien connus de l'homme du métier. On peut utiliser tout agent de couplage susceptible d'assurer efficacement, dans les compositions de caoutchouc diénique utilisables pour la fabrication de pneumatiques, la liaison entre une charge inorganique renforçante telle que silice et un élastomère diénique, en particulier des organosilanes ou des polyorganosiloxanes polyfonctionnels porteurs des fonctions U et Y.

On utilise notamment des silanes polysulfurés, dits "symétriques" ou "asymétriques" selon leur structure particulière, tels que décrits par exemple dans les demandes WO03/002648 et WO03/002649.

Conviennent en particulier pour la mise en oeuvre de l'invention, sans que la définition ci-après soit limitative, des silanes polysulfurés dits "symétriques" répondant à la formule générale (II) suivante:

(II) $Q\text{-}A\text{-}S_n\text{-}A\text{-}Q$,

dans laquelle:

- n est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Q répond à l'une des formules ci-après:

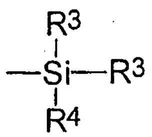 ; 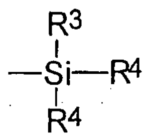 ; 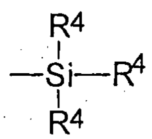 ,

dans lesquelles:

- les radicaux $R^3$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle) ;

- les radicaux $R^4$, substitués ou non substitués, identiques ou différents entre eux, représentent un groupe hydroxyle, alkoxyle en $C_1$-$C_{18}$ ou cycloalkoxyle en $C_5$-$C_{18}$ (de préférence un groupe choisi parmi hydroxyle, alkoxyles en $C_1$-$C_8$ et cycloalkoxyles en $C_5$-$C_8$, plus préférentiellement encore un groupe choisi parmi hydroxyle et alkoxyles en $C_1$-$C_4$, en particulier parmi hydroxyle, méthoxyle et éthoxyle).

Dans le cas d'un mélange de silanes polysulfurés répondant à la formule (II) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des silanes disulfurés (n=2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$.

On citera également comme exemples d'agents de couplage avantageux les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure ou disulfure de bis-monoéthoxy-diméthylsilylpropyl tel que décrits dans la demande WO02/083782.

A titre d'exemples d'agents de couplage autres que les alkoxysilanes polysulfurés précités, on citera notamment des polyorganosiloxanes bifonctionnels ou encore des polysulfures d'hydroxysilane ($R^4$ = OH dans la formule II ci-dessus) tels que décrits dans les demandes WO 02/30939 et WO 02/31041.

Dans les compositions conformes à l'invention, le taux d'agent de couplage est avantageusement inférieur à 10 pce, étant entendu qu'il est en général souhaitable d'en utiliser le moins possible. Son taux est préférentiellement inférieur à 7 pce, plus préférentiellement inférieur à 5 pce, en particulier compris entre 0,5 et 4 pce.

L'agent de couplage pourrait être préalablement greffé (via la fonction "U") sur l'élastomère diénique de la composition de l'invention, l'élastomère ainsi fonctionnalisé ou "précouplé" comportant alors la fonction "Y" libre pour la charge polymère. L'agent de couplage pourrait également être préalablement greffé (via la fonction "Y") sur la charge PVAr via sa fonction Z, la charge ainsi "précouplée" pouvant ensuite être liée à l'élastomère diénique par l'intermédiaire de la fonction libre "U". On préfère toutefois, notamment pour des raisons de meilleure mise en oeuvre des compositions à l'état cru, utiliser l'agent de couplage soit greffé sur la charge polymère, soit à l'état libre (c'est-à-dire non greffé).

<u>II-5. Additifs divers</u> .

Les compositions de caoutchouc conformes à l'invention comportent également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, des agents anti-oxydants, des agents anti-fatigue, des résines renforçantes ou plastifiantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés. Le taux global d'un tel agent plastifiant préférentiel est de préférence compris entre 10 et 50 pce, plus préférentiellement entre 20 et 40 pce.

Parmi ces résines plastifiantes hydrocarbonées (on rappelle que l'appellation "résine" est réservée par définition à un composé solide), on citera notamment les résines d'homo- ou copolymères d'alphapinène, betapinène, dipentène ou polylimonène, coupe C5, par exemple de copolymère coupe C5/styrène, utilisables seules ou en combinaison avec des huiles plastifiantes comme des huiles MES ou TDAE.

A la charge renforçante précédemment décrite (i.e., charge polymère PVAr plus noir de carbone et/ou charge inorganique telle que silice HDS, le cas échéant) peuvent être également ajoutés, selon l'application visée, des charges inertes (non renforçantes) telles que particules d'argile, bentonite, talc, craie, kaolin, utilisables par exemple dans des flancs ou des bandes de roulement de pneumatique colorés.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes).

II-6. Préparation des compositions de caoutchouc

Les compositions de l'invention sont fabriquées dans des mélangeurs appropriés, en utilisant par exemple deux phases de préparation successives selon une procédure générale bien connue de l'homme du métier : une première phase de travail ou malaxage thermomécanique (parfois qualifiée de phase "non-productive") à haute température, jusqu'à une température maximale prédéterminée (ici comprise entre 110°C et 190°C, de préférence entre 120°C et 170°C), suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon le meilleur mode connu de réalisation, les nanoparticules de PVAr sont incorporées à la composition de l'invention sous la forme du masterbatch précédemment décrit.

A titre d'exemple, tous les constituants des compositions de l'invention, à l'exception du système de vulcanisation, en particulier la charge PVAr dans son masterbatch et son agent de couplage sont incorporés de manière intime, par malaxage, à l'élastomère diénique (ou au mélange d'élastomères diéniques) de la composition au cours de la première phase dite non-productive, c'est-à-dire que l'on introduit dans le mélangeur et que l'on malaxe thermomécaniquement, en une ou plusieurs étapes, ces différents constituants de base jusqu'à atteindre la température maximale prédéfinie. La durée totale du malaxage, dans cette phase non-productive, est de préférence comprise entre 1 et 15 min.

Après refroidissement du mélange ainsi obtenu au cours de la première phase non-productive, on incorpore alors le système de vulcanisation à basse température, généralement dans un mélangeur externe tel qu'un mélangeur à cylindres ; le tout est alors mélangé (phase productive) pendant quelques minutes, par exemple entre 2 et 15 min.

Le système de vulcanisation proprement dit est préférentiellement à base de soufre et d'un accélérateur. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation peuvent venir s'ajouter, incorporés au cours de la première phase non-productive et/ou au cours de la phase productive, divers accélérateurs secondaires ou activateurs de vulcanisation connus, tels qu'oxyde de zinc, acides gras comme l'acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

**III. EXEMPLES DE REALISATION**

III-1. Essai 1

Dans les exemples de réalisation qui suivent, la charge de PVAr fonctionnalisé (Z) et réticulé est synthétisée par polymérisation radicalaire de 4 monomères différents - styrène, EVB, DVB et MTSP - puis incorporée à la composition de caoutchouc de l'invention sous la forme d'un masterbatch obtenu par coprécipitation d'un latex de la charge PVAr et d'un latex d'un élastomère diénique (SBR).

Selon un mode de réalisation particulièrement préféré, le taux pondéral de monomère porteur de la fonction Z (ici, MTSP) est compris entre 20 et 30%, celui du monomère réticulant (ici DVB) est compris entre 10% et 30%, la fraction pondérale totale des motifs styréniques (soit dans le cas présent styrène, EVB et DVB) étant supérieure à 70%.

III-1-A. Synthèse de la charge PVAr

La polymérisation radicalaire en émulsion est réalisée en milieu tamponné à pH égal à 7, avec introduction simultanée dans un réacteur du styrène, du MTSP (produit Aldrich), et d'un mélange de DVB et EVB (produit DVB de Fluka comportant en fait 50% de DVB et 50% d'isomères de l'EVB) ; ledit mélange a été préalablement lavé 3 fois par une solution aqueuse de soude 1M (3x165 ml pour 200 ml de mélange DVB), puis lavé à l'eau jusqu'à pH neutre.

Les différents monomères sont préalablement soumis à un barbotage d'azote, ainsi que les solutions aqueuses utilisées à l'exception de la solution de SDS (barbotage à l'état de poudre). La réaction est menée dans un réacteur de 1,5 litres muni d'une agitation mécanique et d'un réfrigérant. Après introduction de 845 ml d'eau et un barbotage à l'azote de 30 min sous agitation, sont introduits successivement 50 ml d'une solution aqueuse de dodécylsulfate de sodium (SDS) à 0,9 mol/l à titre d'agent tensioactif, 50 ml à 1 mol/l d'une solution tampon équimolaire d'hydrogéno-phosphate de sodium et de dihydrogénophosphate d'ammonium. A cette solution tamponnée à pH 7, agitée lentement à 150 tr/min et chauffée à 60°C, est ajoutée la charge monomères composée de 36,4 g de styrène (soit une fraction pondérale de 37%), 24,8 g de MTSP (fraction pondérale de 25%), 18,7 g de DVB (fraction pondérale de 19%) et 18,7 g de EVB (fraction pondérale de 19%) (total 98,6 g de monomères).

Sous forte agitation (350 tr/min) sont alors ajoutés à l'émulsion résultante 36 ml d'une solution aqueuse de persulfate de potassium (0,125 mol/1). Après 2h 45min à 60°C sous agitation, 18 ml d'une solution aqueuse d'hydroquinone (0,5 mol/1) sont ajoutés au milieu de polymérisation. Le milieu réactionnel est refroidi avant mélange avec l'élastomère (conversion mesurée par extrait sec de 95%).

La charge de PVAr fonctionnalisé et réticulé ainsi obtenue se présente sous la forme d'un latex comportant environ 10% en poids de polymère et le complément (environ 90%) en eau.

La caractérisation du latex de charge est réalisée conformément au paragraphe I-1-A. Le cliché MET reproduit à la Figure 1 montre que les nanoparticules (particules élémentaires) se présentent sous forme de nanobilles qui ont en majorité un diamètre compris entre 20 et 60 nm. Le diamètre circulaire moyen est égal à 30 nm (écart-type 6 nm).

A ce stade, la charge PVAr est isolée et séchée pour évaluation de son taux de fonctionnalisation (Z) apporté par le monomère MTSP, par dosage du taux de silicium, en procédant comme suit :

- une première étape de solubilisation de l'échantillon en milieu aqueux par calcination puis par fusion alcaline des cendres obtenues ;
- une seconde étape de dosage quantitatif du silicium par spectrométrie d'émission atomique par plasma induit (ICP/AES).

Plus précisément, on opère de la manière suivante : l'échantillon est calciné à 525°C durant 2 heures. La fusion est ensuite conduite sur les cendres obtenues, à 1150°C (± 50°C) avec du tétraborate de lithium (par exemple 2 g pour 1 g de charge calcinée), pendant environ 25 min. Après refroidissement, la totalité de la perle de fusion obtenue est solubilisée à 80°C dans de l'acide chlorhydrique dilué à 2% dans l'eau. La solution est ensuite transférée et ajustée en fiole jaugée.

Le dosage du silicium est alors réalisé, sur le contenu de la fiole jaugée, par ICP/AES : la solution aqueuse est envoyée dans un plasma d'argon via un système d'introduction, où elle subit les phases de désolvatation, d'atomisation puis d'excitation/ionisation des atomes présents. La raie d'émission du silicium à 251,611 nm est ensuite sélectionnée par le biais d'un monochromateur, puis quantifiée par rapport à une courbe d'étalonnage préparée à partir d'une solution étalon certifiée de l'élément correspondant (l'intensité I de la raie émise étant proportionnelle à la concentration C de l'élément correspondant).

Le résultat est exprimé en % massique de Silicium rapporté à l'échantillon sec (préalablement séché à 105°C durant 2 heures), selon la formule:

$$\% \text{ Si} = C.V. (100 / M)$$

dans laquelle :

- C = concentration en Si exprimée en mg/L ;
- V = volume de la fiole jaugée en L ;
- M = masse de l'échantillon en mg.

La valeur mesurée est comparée à celle d'un témoin poly(styrène-DVB-EVB) synthétisé de manière identique mais sans MTSP.

Les résultats ci-dessous démontrent clairement que le Silicium présent dans la charge PVAr est bien dû à la fonctionnalisation du PVAr apportée par le monomère MTSP :

| Taux de Si (± 0.2%) | saris MTSP | avec MTSP |
|---|---|---|
| Dosé (%) | non détecté | 2.9% |

La poudre résultante est également analysée par RMN du $^{29}Si$ en CPMAS (spectromètre AV 200 MHz, vitesse de rotation 4 kHz) ; l'analyse révèle un massif majoritaire entre -41 ppm et -38 ppm, caractéristique d'un silicium du type Si-X tel que décrit précédemment.

La densité de la charge est mesurée sur la poudre, à l'aide d'un pycnomètre à hélium : la valeur obtenue est égale à 1,1 $g/cm^3$.

III-1-B. Préparation du masterbatch

Le latex de charge PVAr est ensuite incorporé directement à un élastomère diénique SBR pour obtention d'un masterbatch comme indiqué au paragraphe II-3 précédent. Le taux de charge PVAr visé dans le masterbatch, comme dans la composition de caoutchouc visée finale, est de 39 pce.

Le latex de SBR est préparé de manière connue de l'homme de l'art, dans les conditions suivantes : température de polymérisation : 5°C; tensioactif : dodécylsulfate de sodium ; amorceur : système rédox sel de fer II/hydroperoxyde. La conversion est de l'ordre de 50 à 60%. Le SBR ainsi fabriqué présente les caractéristiques suivantes : viscosité inhérente à 0,1 g/dl dans le toluène à 25°C : 3,11 ; viscosité Mooney (MS) égale à 67 ; Tg (DSC) =-52°C ; microstructure : styrène 23,6%, phase butadiène : vinyl 15,0%, trans 70.1 %, cis 14.9%.

La quantité de matière sèche du latex de SBR est déterminée par pesée, sur extrait sec, avant de préparer le masterbatch. Le latex de SBR est dilué 3 fois à l'eau, soit 734 ml de latex de SBR à 216,6 g/l (159 g de SBR) et 1468 ml d'eau de dilution.

Dès sa synthèse terminée, le latex de charge PVAr est refroidi à température ambiante puis ajouté au latex de SBR dilué à raison de 39 pce de charge, soit 743 ml de latex de charge polymère à 83,4 g/l (62 g de charge). Le mélange résultant est homogénéisé doucement. A raison de 100 ml/min, le mélange est alors ajouté sur 6000 ml de méthanol agité à 350 tr/min. Le précipité ainsi obtenu est filtré sur papier filtre, rincé avec de l'eau jusqu'à faible moussage résiduel constant des eaux de lavage et test négatif des eaux de lavage au nitrate d'argent. Le précipité ainsi lavé est séché sous pression réduite sous azote à 60°C pendant 3 à 4 jours. 212 g de masterbatch sec sont ainsi récupérés.

III-1-C. Préparation des compositions de caoutchouc

La composition témoin (charge silice HDS) est préparée de manière conventionnelle, comme suit : dans un mélangeur interne, dont la température initiale de cuve est d'environ 90°C, on introduit tout d'abord ("phase non-productive") l'élastomère SBR préalablement étendu avec 37,5 pce d'huile aromatique, ainsi qu'une partie de la charge. Après un temps approprié de malaxage, de l'ordre de 1 min, on ajoute l'agent de couplage et la partie restante de charge. Les autres ingrédients, à l'exception du système de vulcanisation, sont ajoutés au bout de 2 min. Le mélangeur interne est alors rempli à 75%. On conduit alors un travail thermomécanique d'une durée de 6 min environ, avec une vitesse moyenne des palettes de 70 tours/min, jusqu'à obtenir une température de tombée d'environ 135°C.

On procède de manière identique pour la composition conforme à l'invention (charge PVAr), à la différence près que la charge polymère et l'élastomère diénique sont introduits en une seule fois dès le début, sous forme du masterbatch précédemment préparé comportant 39 pce de particules de PVAr ; puis l'huile d'extension est incorporée de manière progressive.

Après le travail thermomécanique de malaxage, on récupère le mélange obtenu, on le refroidit puis on ajoute le système de vulcanisation (soufre et accélérateur primaire type sulfénamide) sur un mélangeur externe à 30°C, en mélangeant le tout ("phase productive") pendant un temps approprié (entre 5 et 12 min).

Les compositions ainsi obtenues sont ensuite soit calandrées sous la forme de plaques (épaisseur de 2 à 3 mm) de caoutchouc pour la mesure de leurs propriétés mécaniques, soit extrudées sous la forme d'un produit semi-fini pour pneumatique, par exemple une bande de roulement. La vulcanisation (cuisson) est effectuée à 150°C pendant 40 min, sous pression.

Le cliché de MET (réalisé selon paragraphe I-1-B) représenté à la Figure 2 est celui réalisé sur la composition de l'invention ; il montre que la charge PVAr se présente sous forme de particules élémentaires sphériques (nanobilles), assemblées en agrégats dispersés de manière homogène dans la phase élastomérique.

III-1-D. Test comparatif de caoutchouterie

Le but de cet essai est de comparer les performances de la charge PVAr à celle de la charge inorganique conventionnelle (silice HDS).

On compare pour cela deux compositions dont la formulation générale est conventionnelle pour des bandes de roulement de pneumatiques à hautes performances, combinant faible résistance au roulement et résistance élevée à l'usure (pneus tourisme à faible consommation d'énergie dits "Pneus Verts"). La silice HDS choisie pour renforcer la composition témoin est une silice de grade pneumatique présentant de manière connue un très haut pouvoir renforçant

("Zeosil" type "1165MP" de la société Rhodia - densité d'environ 2,1 g/cm$^3$).

Pour la composition témoin, l'élastomère diénique utilisé est le SBR dont la synthèse est décrite au paragraphe III-1-B qui précède, préalablement étendu avec 37,5% d'huile aromatique (soit 37,5 pce d'huile pour 100 pce de SBR sec).

Les deux compositions testées sont strictement identiques à la nature de la charge renforçante près :

- composition C-1 : silice HDS (témoin) ;
- composition C-2 : PVAr fonctionnalisé MTSP.

Le taux de charge renforçante a été ajusté à iso-fraction volumique de charge (même volume - soit environ 19% - de charge dans chaque composition). La surface spécifique de la charge polymère étant plus faible, la quantité d'agent de couplage TESPT introduit dans la composition C-2 est donc plus faible.

Dans la composition C-2 de l'invention, la charge PVAr représente environ 97% (en volume), de la totalité de la charge renforçante, cette dernière comportant une faible proportion (2 pce) de noir de carbone.

Les tableaux 1 et 2 donnent successivement la formulation des différentes compositions (tableau 1 - taux des différents produits exprimés en pce), leurs propriétés avant et après cuisson à 150°C pendant 40 min (tableau 2). La Figure 3 reproduit les courbes de module sécant vrai (en MPa) en fonction de l'allongement (en %) ; ces courbes sont notées C1 et C2 et correspondent respectivement aux compositions de caoutchouc C-1 et C-2.

L'examen des différents résultats du tableau 2 montre, pour la composition conforme à l'invention C-2 comparée à la composition témoin C-1 :

- à l'état cru, une sécurité au grillage (Ti) et une cinétique de vulcanisation (constante K) légèrement améliorées ;
- une réduction très sensible de la masse volumique (mesurée à l'aide d'un pycnomètre à hélium), d'environ 16% par rapport à la composition témoin (différence bien sûr maintenue après cuisson) ;
- après cuisson, des valeurs plus élevées de module sous forte déformation (M300, M400), indicateur clair pour l'homme du métier d'un niveau de renforcement très élevé, au moins égal sinon supérieur à celui apporté par la silice HDS de référence ;
- enfin, ce qui n'est pas le moindre, des propriétés d'hystérèse qui, de manière inattendue, sont très sensiblement améliorées comme illustré par une forte diminution des valeurs de $\tan(\delta)_{max}$ et de $\Delta G^*$, ce qui est indicateur reconnu d'une résistance au roulement et d'un échauffement réduits.

La Figure 3 annexée confirme bien les résultats ci-dessus : on note que la courbe C2 est située nettement au-dessus de la courbe C1, l'écart s'accentuant notamment lorsque l'allongement augmente ; ceci illustre un haut niveau de renforcement, au moins égal à celui offert par la silice HDS, en d'autres termes une haute qualité de la liaison ou couplage entre le PVAr fonctionnalisé et l'élastomère diénique:

<u>III-2. Essai 2</u>

Dans les exemples de réalisation qui suivent, trois charges polymère (notées respectivement charge A, charge B et charge C) de PVAr fonctionnalisé et réticulé sont synthétisées par polymérisation radicalaire de 4 monomères différents :

- charge A : styrène, EVB, DVB et MTSP (méthacrylate de triméthoxysilyl propyle) ;
- charge B : styrène, EVB, DVB et TSES (styryléthyl-triméthoxysilane) ;
- charge C : styrène, EVB, DVB et HEMA (méthacrylate d'hydroxyéthyle).

Seules les charges A et B sont donc porteuses d'une fonction Z de formule ≡ Si - X (X représentant un groupe hydroxyle ou hydrolysable) et conviennent donc aux compositions de l'invention.

On rappelle que le méthacrylate d'hydroxyéthyle (HEMA) répond à la formule suivante :

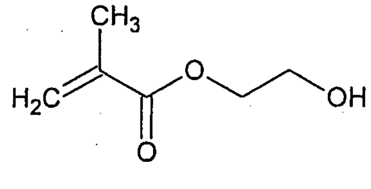

Ce monomère a été notamment utilisé comme comonomère fonctionnalisant dans la synthèse de certaines charges polymère, comme décrit par exemple dans les documents brevet EP-A-1 063 259 ou US-B-6 399 706.

Comme précédemment dans l'Essai 1, pour être testées et comparées, ces trois charges sont ensuite incorporées à des compositions de caoutchouc sous la forme d'un masterbatch obtenu par coprécipitation d'un latex de la charge PVAr et d'un latex d'un élastomère diénique (SBR).

III-2-A. Synthèse des charges PVAr

La polymérisation radicalaire en émulsion est réalisée en milieu tamponné à pH égal à 7, avec introduction simultanée dans un réacteur du styrène, selon la fonctionnalisation visée du MTSP (charge A), du TSES (charge B) ou du HEMA (charge C), et d'un mélange de DVB et EVB (produit DVB de Fluka comportant en fait 50% de DVB et 50% d'isomères de l'EVB) ; ledit mélange a été préalablement lavé 3 fois par une solution aqueuse de soude 1M (3x165 ml pour 200 ml de mélange DVB), puis lavé à l'eau jusqu'à pH neutre.

Les différents monomères sont préalablement soumis à un barbotage d'azote, ainsi que les solutions aqueuses utilisées à l'exception de la solution de SDS (barbotage à l'état de poudre). L'HEMA est distillé auparavant. La réaction est menée dans un réacteur de 1,5 litres muni d'une agitation mécanique et d'un réfrigérant. Après introduction de 845 ml d'eau, respectivement 773 ml dans le cas du TSES, et un barbotage à l'azote de 30 min sous agitation, sont introduits successivement 50 ml d'une solution aqueuse de SDS à 0,9 mol/l, 50 ml à 1 mol/l d'une solution tampon équimolaire d'hydrogéno-phosphate de sodium et de dihydrogénophosphate d'ammonium.

A cette solution tamponnée à pH 7, agitée lentement à 150 tr/min et chauffée à 60°C, est ajoutée la charge monomères comme suit :

- ■ charge A : constituée de 36,4 g de styrène (soit une fraction pondérale de 37%), 24,8 g de MTSP (fraction pondérale de 25%), 18,7 g de DVB (fraction pondérale de 19%) et 18,7 g de EVB (faction pondérale de 19%) (total 98,6 g de monomères) ;
- ■ charge B : constituée de 36,4 g de styrène (soit une fraction pondérale de 36%), 26,9 g de TSES (fraction pondérale de 26,7%), 18,7 g de DVB (fraction pondérale de 18,6%) et 18,7 g de EVB (fraction pondérale de 18,6%) (total 100,7 g de monomères) ;
- ■ charge C : constituée de 36,4 g de styrène (soit une fraction pondérale de 42%), 13,1 g de HEMA (fraction pondérale de 15,1 %), 18,7 g de DVB (fraction pondérale de 21,5%) et 18,7 g de EVB (fraction pondérale de 21,5%) (total 86,9 g de monomères).

Sous forte agitation (350 tr/min) sont alors ajoutés à l'émulsion résultante 36 ml d'une solution aqueuse de persulfate de potassium (0,125 mol/l). Le TSES étant stabilisé avec le TBC (4-tert butylcatéchol), la quantité de solution introduite pour ce dernier est de 108 ml. Après 2h 45min à 60°C sous agitation, 18 ml d'une solution aqueuse d'hydroquinone (0,5 mol/l) sont ajoutés au milieu de polymérisation. Le milieu réactionnel est refroidi avant mélange avec l'élastomère (conversion mesurée par extrait sec de 95%).

Les charges de PVAr fonctionnalisé et réticulé ainsi obtenues se présentent sous la forme d'un latex comportant environ 10% en poids de polymère et le complément (environ 90%) en eau. Le dosage du taux de silicium sur les charges A et B, conduit comme indiqué précédemment à l'Essai 1, confirme bien la fonctionnalisation apportée par les monomères MTSP et TSES (taux de silicium d'environ 2,7 à 2,9%) ; pour ces charges A et B, l'analyse par RMN confirme bien la présence d'un massif majoritaire entre -41 ppm et -38 ppm, caractéristique d'un silicium du type Si-X.

III-2-B. Préparation des masterbatch

Dès leur synthèse terminée, les latex de charge sont refroidis à température ambiante puis ajoutés chaque fois au latex de SBR (dilué à 216,6 g/l) préparé comme indiqué précédemment à l'Essai 1 (paragraphe III-1-B), pour obtention d'un masterbatch. Comme précédemment, le taux de charge PVAr visé dans le masterbatch, comme dans la composition de caoutchouc finale, est de 39 pce.

III-2-C. Préparation des compositions de caoutchouc

Dans un mélangeur interne, dont la température initiale de cuve est d'environ 90°C, on introduit tout d'abord en une seule fois ("phase non-productive") la charge polymère et l'élastomère diénique sous forme du masterbatch précédemment préparé comportant 39 pce de particules de PVAr. Après un temps approprié de malaxage, de l'ordre de 1 min, on ajoute l'agent de couplage puis l'huile d'extension est incorporée de manière progressive. Les autres ingrédients, à l'exception du système de vulcanisation, sont ajoutés au bout de 2 min. Le mélangeur interne est alors rempli à 75%. On conduit alors un travail thermomécanique d'une durée de 6 min environ, avec une vitesse moyenne des palettes de 70 tours/min, jusqu'à obtenir une température de tombée d'environ 135°C.

Après le travail thermomécanique de malaxage, on récupère le mélange obtenu, on le refroidit puis on ajoute

le système de vulcanisation (soufre et accélérateur primaire type sulfénamide) sur un mélangeur externe à 30°C, en mélangeant le tout ("phase productive") pendant un temps approprié (entre 5 et 12 min). Les compositions ainsi obtenues sont ensuite soit calandrées sous la forme de plaques (épaisseur de 2 à 3 mm) de caoutchouc pour la mesure de leurs propriétés mécaniques, soit extrudées sous la forme d'un produit semi-fini pour pneumatique, par exemple une bande de roulement. La vulcanisation (cuisson) est effectuée à 150°C pendant 40 min, sous pression.

III-2-D. Test comparatif de caoutchouterie

Le but de cet essai est de comparer les performances des deux compositions conformes à l'invention (respectivement notées C-3 et C-4) incorporant les charges A et B, à la composition non conforme à l'invention (notée C-5) incorporant la charge C témoin. Les trois compositions sont par exemple destinées à des bandes de roulement de pneumatiques.

Les tableaux 3 et 4 donnent successivement la formulation des différentes compositions (tableau 3 - taux des différents produits exprimés en pce), leurs propriétés avant et après cuisson à 150°C pendant 40 min (tableau 4). Dans les trois compositions, la charge PVAr fonctionnalisé représente environ 97% (% en volume) de la totalité de la charge renforçante, cette dernière comportant en outre une très faible proportion (2 pce) de noir de carbone. La Figure 4 reproduit les courbes de module sécant vrai (en MPa) en fonction de l'allongement (en %) ; ces courbes sont notées C3, C4 et C5 et correspondent respectivement aux compositions de caoutchouc C-3, C-4 et C-5.

L'examen des résultats du tableau 4 montre pour les deux compositions C-3 et C-4 conformes à l'invention, comparée à là composition C-5 non conforme à invention :

- une masse volumique identique ;
- après cuisson, des valeurs de module sous forte déformation (M100 et M300) nettement plus élevées, indicateur clair d'un niveau de renforcement supérieur apporté par les charges A et B ; la Figure 4 annexée confirme bien les résultats ci-dessus, les courbes C3 et C4 étant situées nettement au-dessus de la courbe C5, avec un écart s'accentuant lorsque l'allongement augmente ;
- enfin et surtout des valeurs d'hystérèse (illustrées par $\tan(\delta)_{max}$ et de $\Delta G^*$) qui sont maintenues au niveau remarquablement bas de la composition C-1 précédente, très en deça des valeurs observées sur la composition C-5, ce qui laisse présager une résistance au roulement et un échauffement très nettement réduits grâce à l'utilisation des charges polymère A et B.

III-3. Essai 3

Dans cet essai, une nouvelle charge de PVAr fonctionnalisé (Z) et réticulé est synthétisée comme décrit précédemment à l'Essai 1, mais selon une plus grande échelle. Elle est ensuite incorporée, sous la forme d'un masterbatch, à une composition de caoutchouc conforme à l'invention qui est finalement comparée à une composition de caoutchouc témoin chargée conventionnellement de silice HDS.

III-3-A. Synthèse de la charge PVAr

Comme dans les essais précédents, la polymérisation radicalaire en émulsion est réalisée en milieu tamponné (pH égal à 7), avec introduction simultanée dans un réacteur du styrène, du MTSP (produit Aldrich), et d'un mélange de DVB et EVB (produit DVB de Fluka) ; ledit mélange a été préalablement lavé 3 fois par une solution aqueuse de soude 1M, puis lavé à l'eau jusqu'à pH neutre.

Les différents monomères sont préalablement soumis à un barbotage d'azote, ainsi que les solutions aqueuses utilisées à l'exception de la solution de SDS (barbotage à l'état de poudre). La réaction est menée dans un réacteur de 30 litres muni d'une agitation mécanique. Après introduction de 16,3 1 d'eau et un barbotage à l'azote de 30 min sous agitation, la température est portée à 60 °C. Ensuite sont introduits successivement 965 ml d'une solution aqueuse de SDS à 0,9 mol/l, 965 ml à 1 mol/l d'une solution tampon équimolaire d'hydrogéno-phosphate de sodium et de dihydrogénophosphate d'ammonium. A cette solution tamponnée à pH 7, agitée lentement à 150 tr/min et chauffée à 60°C, est ajoutée la charge monomères composée de 701 g de styrène (soit une fraction pondérale de 37%), 478 g de MTSP (fraction pondérale de 25%), 361,5 g de DVB (fraction pondérale de 19%) et 361,5 g de EVB (fraction pondérale de 19%) (total 1902 g de monomères).

Sous forte agitation (350 tr/min) sont alors ajoutés à l'émulsion résultante 695 ml d'une solution aqueuse de persulfate de potassium (0,125 mol/l). Après 2h 45min à 60°C sous agitation, 345 ml d'une solution aqueuse d'hydroquinone (0,5 mol/l) sont ajoutés au milieu de polymérisation. Le milieu réactionnel est refroidi et dilué avec 42 1 d'eau avant mélange avec le latex d'élastomère, soit 63,3 1 de latex de charge PVAr fonctionnalisé (Z) à 28,5 g/l (1807 g de charge).

Les caractéristiques physico-chimiques du latex de charge ainsi préparé sont sensiblement identiques à celles trouvées pour le produit synthétisé à plus petite échelle (Essai 1). En particulier, l'analyse montre que les nanoparticules (particules élémentaires) se présentent sous forme de nanobilles qui ont en majorité un diamètre compris entre 20 et 60 nm (diamètre circulaire moyen d'environ 30 nm). La densité de la chargée, mesurée sur poudre, est égale à 1,1 g/cm$^3$.

III-3-B. Préparation du masterbatch

Le latex de charge PVAr, dilué et refroidi à température ambiante, est ensuite ajouté à un latex de SBR (21,5 1 de latex de SBR à 216 g/l) pour atteindre une concentration en charge de 39 pce. Le mélange résultant est homogénéisé doucement ; à ce stade, on peut notamment ajouter un agent antioxydant (dissous par exemple dans un solvant approprié tel que le toluène), par exemple sous forme d'une émulsion aqueuse. A raison de 21/min, le mélange est alors ajouté sur 168 1 de méthanol fortement agité, pour précipitation du masterbatch. Le précipité ainsi obtenu est filtré, rincé avec de l'eau jusqu'à faible moussage résiduel constant des eaux de lavage et test négatif des eaux de lavage au nitrate d'argent. Le masterbatch ainsi lavé est séché sous pression réduite sous azote à 60°C, pendant 2 jours.

III-3-C. Tests de caoutchouterie

Deux compositions de caoutchouc notées C-6 et C-7 sont ensuite préparées, comme indiqué précédemment pour l'Essai 1. Les deux compositions testées sont strictement identiques à la nature de la charge renforçante près :

- composition C-6 : silice HDS (témoin) ;
- composition C-7 : PVAr fonctionnalisé MTSP.

Le taux de charge renforçante a été ajusté à iso-fraction volumique de charge (même volume - soit environ 19% - de charge dans chaque composition). Grâce à la densité réduite de la charge organique, la masse volumique de la composition C-7 est nettement réduite (1,01 g/cm$^3$ au lieu de 1,19 g/cm$^3$). La surface spécifique de la charge polymère étant plus basse, la quantité d'agent de couplage TESPT introduit dans la composition C-7 est donc plus faible.

Les tableaux 5 et 6 donnent successivement la formulation des différentes compostions (tableau 5 - taux des différents produits exprimés en pce), leurs propriétés après cuisson à 150°C pendant 40 min (tableau 6).

L'examen des résultats du tableau 6 montre, pour la composition conforme à l'invention C-7 comparée après cuisson à la composition témoin C-6 :

- des valeurs plus élevées de module sous forte déformation (M300, M400), indicateur clair d'un niveau de renforcement très élevé, au moins égal sinon supérieur à celui apporté par la silice HDS de référence ;
- des propriétés d'hystérèse très sensiblement améliorées (forte diminution des valeurs de $\tan(\delta)_{max}$ et de $\Delta G^*$), ce qui confirme largement les résultats inattendus déjà observés aux Essais 1 et 2 qui précèdent.

Deux compositions similaires aux compositions C-6 et C-7 ci-dessus (formulées avec une huile TDAE en lieu et place de l'huile aromatique) ont été comparées en tant que bandes de roulement dans le cadre d'un essai de roulage réel sur pneumatiques pour véhicule de tourisme. Comparée à la composition témoin, la composition selon l'invention a révélé une diminution (amélioration) tout à fait notable de 9,5% de la résistance au roulement, confirmant ainsi les gains sensibles en hystérèse observés au stade du laboratoire. En outre, et de manière tout aussi inattendue, on a observé une augmentation (amélioration) de 13% de la résistance à l'usure de la bande de roulement de l'invention.

III-4. Essai 4

Dans ce nouvel essai, une charge de PVAr synthétisée comme indiqué précédemment à l'Essai 2 (réacteur de 30 litres) est incorporée à une composition de caoutchouc sous la forme d'un masterbatch obtenu par coprécipitation du latex de charge PVAr et d'un latex de caoutchouc naturel (NR). Ladite composition, conforme à l'invention, est finalement comparée à une composition de caoutchouc témoin à base de NR et chargée conventionnellement de silice HDS.

III-4-A. Préparation du masterbatch

Le latex de charge PVAr est incorporé à du caoutchouc naturel pour obtention d'un masterbatch. Le taux de charge PVAr visé dans le masterbatch, comme dans la composition de caoutchouc finale, est de 39 pce. La quantité de matière sèche dans le latex NR est déterminée par pesée, sur extrait sec. Avant de préparer le masterbatch, le latex de NR est ensuite dilué à l'eau jusqu'à un teneur de 200 g/l de NR.

Le latex de charge PVAr dilué et refroidi à température ambiante est ajouté au latex de NR dilué à raison de 39 pce de charge (soit 23 1 de latex de NR a 200 g/l). Ensuite 64 g d'antioxydant (N-(1,3-diméthylbutyl)-N'-phenyl-p-phénylènediamine) sont ajoutés sous forme d'une émulsion aqueuse et le mélange résultant est homogénéisé doucement. A raison de 2 1/min, ce mélange est alors ajouté sur 168 1 de méthanol fortement agité, pour précipitation du masterbatch.

Le précipité ainsi obtenu est filtré, rincé avec de l'eau, puis le méthanol est enlevé par distillation à la vapeur d'eau. Le masterbatch est ensuite lavé à l'eau pour élimination du tensioactif et des sels tampon, par plusieurs cycles de dilution et décantations successives jusqu'à faible moussage résiduel constant des eaux de lavage et test négatif des eaux de lavage au nitrate d'argent. Le masterbatch ainsi lavé est filtré et ensuite séché sous pression réduite (sous azote) à 60°C pendant 2 jours.

III-4-B. Tests de caoutchouterie

Deux compositions de caoutchouc NR sont ensuite préparées comme indiqué précédemment pour l'Essai 1 (température de tombée d'environ 145°C), ces deux compositions différant seulement par la nature de leur charge renforçante, comme suit:

- composition C-8 (témoin) : silice HDS ;
- composition C-9 (invention) : PVAr fonctionnalisé MTSP.

A titre d'exemples d'application préférentiels, de telles compositions de caoutchouc sont typiquement utilisées dans les parties de systèmes de liaison au sol, notamment de pneumatiques, utilisant habituellement des matrices de caoutchouc à base de NR, comme par exemple les appuis internes de sécurité pour pneumatiques, les flancs, les zones bourrelet des pneumatiques, les sous-couches de bandes de roulement ainsi que les bandes de roulement de ces pneumatiques notamment pour véhicule Poids-lourd.

Le taux de charge renforçante a été ajusté à iso-fraction volumique de charge (même volume - soit environ 17% - de charge dans chaque composition). La surface spécifique de la charge polymère étant plus basse, la quantité d'agent de couplage TESPT introduit dans la composition C-9 est donc nettement plus faible. Dans la composition C-9 de l'invention, la charge PVAr représente environ 97% (en volume), de la totalité de la charge renforçante, cette dernière comportant une faible proportion (1 pce) de noir de carbone.

Les tableaux 7 et 8 donnent successivement la formulation des différentes compositions (tableau 7 - taux des différents produits exprimés en pce), leurs propriétés avant et après cuisson à 150°C pendant 30 min (tableau 8). La Figure 5 reproduit les courbes de module sécant vrai (en MPa) en fonction de l'allongement (en %) ; ces courbes sont notées C8 et C9 et correspondent respectivement aux compositions C-8 et C-9.

L'examen des différents résultats du tableau 8 montre, pour la composition conforme à l'invention C-9 comparée à la composition témoin C-8 :

- à l'état cru, une sécurité au grillage (Ti) et une cinétique de vulcanisation (constante K) voisines ou même améliorées ;
- une réduction très sensible de la masse volumique (-14% environ) ;
- après cuisson, des valeurs plus élevées de module sous très forte déformation (voir valeurs de M600) ; la Figure 5 annexée confirme bien les résultats ci-dessus : on voit que la courbe C9 est située nettement au-dessus de la courbe C8 pour les plus fortes déformations, l'écart entre les deux courbes s'accentuant lorsque l'allongement augmente ; ceci illustre un niveau de renforcement élevé offert par la charge PVAr, au moins égal sinon supérieur à celui offert par la silice HDS de référence ;
- enfin et surtout, ce qui confirme largement tous les résultats précédents observés avec un élastomère diénique synthétique (SBR), des propriétés d'hystérèse qui sont cette fois encore fortement améliorées (valeurs de $(\tan(\delta)_{max}$ et de $\Delta G^*$ très sensiblement réduites).

En conclusion, la charge polymère spécifique de la composition conforme à l'invention, grâce à sa densité très fortement réduite par rapport à une charge renforçante conventionnelle telle que noir de carbone ou silice HDS, permet de diminuer de manière très sensible le poids de ladite composition.

Cet objectif est atteint non seulement sans dégradation du renforcement, synonyme de résistance à l'usure ou à la fissuration, par rapport à ces charges conventionnelles, mais encore en permettant une réduction notable de l'hystérèse, synonyme d'une résistance au roulement ou d'un échauffement encore améliorés par rapport à une charge inorganique renforçante conventionnelle telle qu'une silice HDS.

Enfin, un avantage remarquable de la charge PVAr doit être souligné : la masse volumique de la composition de l'invention devenant sensiblement égale à celle de la charge polymère elle-même, il devient ainsi possible d'augmenter le taux de charge renforçante sans augmenter la densité de la matrice caoutchouteuse.

**Tableau 1**

| Composition N°: | C-1 | C-2 |
|---|---|---|
| SBR (1) | 100 | 100 |
| silice HDS (2) | 77 | - |
| charge PVAr (3) | - | 39 |
| agent de couplage (4) | 6.2 | 1.8 |
| noir de carbone (N234) | 2 | 2 |
| huile aromatique (5) | 37.5 | 37.5 |
| ZnO | 2.5 | 2.5 |
| acide stéarique | 2 | 2 |
| antioxydant (6) | 1.9 | 1.9 |
| soufre | 1.5 | 1.5 |
| accélérateur (7) | 2.5 | 2.5 |

(1) SBR (synthèse décrite au paragraphe III-1-B) ;
(2) silice HDS ("Zeosil" type "1165MP" de la société Rhodia) ;
(3) PVAr fonctionnalisé MTSP (synthèse selon paragraphe III-1) ;
(4) TESPT ("Si69" de la société Degussa) ;
(5) huile aromatique (Exarol MX 140 de la société Total) ;
(6) N-1,3 diméthylbutyl N-phénylparaphénylènediamine ("Santoflex 6-PPD" de la société Flexsys) ;
(7) N-cyclohexyl-2-benzothiazylsulfénamide ("Santocure CBS" de la société Flexsys).

**Tableau 2**

| Composition N°: | C-1 | C-8 |
|---|---|---|
| *Propriétés avant cuisson:* | | |
| Ti (min) | 8 | 12 |
| K($min^{-1}$) | 0.136 | 0.157 |
| masse volumique ($g/cm^3$) | 1.19 | 1.01 |
| *Propriétés après cuisson:* | | |
| M100 (MPa) | 3.7 | 4.8 |
| M300 (MPa) | 11.8 | 13.2 |
| M400 (MPa) | 17.2 | 19.8 |
| contrainte rupture (MPa) | 23.3 | 22.0 |
| allongement rupture (%) | 601 | 484 |
| $\Delta G^*$ | 6.2 | 1.6 |
| $\tan(\delta)_{max}$ | 0.330 | 0.199 |

**Tableau 3**

| Composition N°: | C-3 | C-4 | C-5 |
|---|---|---|---|
| SBR (1) | 100 | 100 | 100 |
| charge PVAr (2) | 39 | - | - |
| charge PVAr (3) | - | 39 | - |
| charge PVAr (4) | - | - | 39 |
| agent de couplage (5) | 1.8 | 1.8 | 1.8 |
| noir de carbone (N234) | 2 | 2 | 2 |
| huile aromatique (6) | 37.5 | 37.5 | 37.5 |
| ZnO | 2.5 | 2.5 | 2.5 |
| acide stéarique | 2 | 2 | 2 |
| antioxydant (7) | 1.9 | 1.9 | 1.9 |
| soufre | 1.5 | 1.5 | 1.5 |
| accélérateur (8) | 2.5 | 2.5 | 2.5 |

(1) SBR (synthèse décrite au paragraphe III-1-B) ;
(2) charge A (PVAr fonctionnalisé MTSP) ;
(3) charge B (PVAr fonctionnalisé TSES) ;
(4) charge C (PVAr fonctionnalisé HEMA) ;
(5) TESPT ("Si69" de la société Degussa) ;
(6) huile aromatique (Exarol MX 140 de la société Total) ;
(7) N-1,3 diméthylbutyl N-phénylparaphénylènediamine ("Santoflex 6-PPD" de la société Flexsys) ;
(8) N-cyclohexyl-2-benzothiazylsulfénamide ("Santocure CBS" de la société Flexsys).

**Tableau 4**

| Composition N°: | C-3 | C-4 | C-5 |
|---|---|---|---|
| masse volumique (g/cm$^3$) | 1.01 | 1.01 | 1.01 |
| *Propriétés après cuisson:* | | | |
| M100 (MPa) | 4.8 | 4.0 | 3.5 |
| M300 (MPa) | 13.2 | 12.2 | 7.5 |
| $\Delta G^*$ | 1.6 | 1.2 | 4.3 |
| $\tan(\delta)_{max}$ | 0.199 | 0.197 | 0.291 |

**Tableau 5**

| Composition N°: | C-6 | C-7 |
|---|---|---|
| SBR (1) | 100 | 100 |
| silice HDS (2) | 77 | - |
| charge PVAr (3) | - | 39 |
| agent de couplage (4) | 6.2 | 1.8 |
| noir de carbone (N234) | 2 | 2 |

(suite)

| Composition N°: | C-6 | C-7 |
|---|---|---|
| huile aromatique (5) | 37.5 | 37.5 |
| ZnO | 2.5 | 2.5 |
| acide stéarique | 2 | 2 |
| antioxydant (6) | 1.9 | 1.9 |
| soufre | 1.5 | 1.5 |
| accélérateur (7) | 2.5 | 2.5 |

(1) SBR (synthèse décrite au paragraphe III-1-B);
(2) silice HDS ("Zeosil" type "1165MP" de la société Rhodia) ;
(3) PVAr fonctionnalisé MTSP ;
(4) TESPT ("Si69" de la société Degussa) ;
(5) huile aromatique (Exarol MX 140 de la société Total) ;
(6) N-1,3 diméthylbutyl N-phénylparaphénylènediamine ("Santoflex 6-PPD" de la société Flexsys) ;
(7) N-cyclohexyl-2-benzothiazylsulfénamide ("Santocure CBS" de la société Flexsys).

**Tableau 6**

| Composition N°: | C-6 | C-7 |
|---|---|---|
| *Propriétés après cuisson:* | | |
| M100 (MPa) | 3.5 | 4.0 |
| M300 (MPa) | 11.3 | 12.9 |
| M400 (MPa) | 17.2 | 17.7 |
| contrainte rupture (MPa) | 15.1 | 14.4 |
| allongement rupture (%) | 426 | 406 |
| $\Delta G^*$ | 5.1 | 1.0 |
| $\tan(\delta)_{max}$ | 0.326 | 0.197 |

**Tableau 7**

| Composition N°: | C-8 | C-9 |
|---|---|---|
| NR (1) | 100 | 100 |
| silice HDS (2) | 50 | - |
| charge PVAr (3) | - | 25.7 |
| noir de carbone (N234) | 1 | 1 |
| agent de couplage (4) | 4 | 1.16 |
| ZnO | 3 | 3 |
| acide stéarique | 2.5 | 2.5 |
| antioxydant (5) | 2.0 | 2.0 |
| soufre | 1.5 | 1.5 |

(suite)

| Composition N°: | C-8 | C-9 |
|---|---|---|
| accélérateur (6) | 1.8 | 1.8 |

(1) caoutchouc naturel ;
(2) silice HDS ("Zeosil" type "1165MP" de la société Rhodia) ;
(3) PVAr fonctionnalisé MTSP ;
(4) TESPT ("Si69" de la société Degussa) ;
(5) N-1,3 diméthylbutyl N-phénylparaphénylènediamine ("Santoflex 6-PPD" de la société Flexsys) ;
(6) N-cyclohexyl-2-benzothiazylsulfénamide ("Santocure CBS" de la société Flexsys).

**Tableau 8**

| Composition N°: | C-8 | C-9 |
|---|---|---|
| *Propriétés avant cuisson:* | | |
| Ti (min) | 9 | 10 |
| K($min^{-1}$) | 0.307 | 0.381 |
| masse volumique ($g/cm^3$) | 1.15 | 0.99 |
| *Propriétés après cuisson:* | | |
| M100 (MPa) | 3.4 | 4.1 |
| M300 (MPa) | 11.1 | 9.8 |
| M400 (MPa) | 16.7 | 15.8 |
| M600 (MPa) | 30.4 | 34.6 |
| contrainte rupture (MPa) | 29.2 | 29.6 |
| allongement rupture (%) | 644 | 600 |
| $\Delta G^*$ | 1.92 | 0.83 |
| $\tan(\delta)_{max}$ | 0.198 | 0.114 |

## Revendications

1. Composition de caoutchouc à base d'au moins un élastomère diénique, une charge polymère, un agent de couplage assurant la liaison entre la charge polymère et l'élastomère, **caractérisée en ce que** ladite charge polymère comporte des nanoparticules de polyvinylaromatique porteur d'une fonction notée Z de formule ≡ Si-X, X représentant un groupe hydroxyle ou hydrolysable.

2. Composition selon la revendication 1, le polyvinylaromatique étant un homopolymère vinylaromatique ou un copolymère dont au moins la fraction pondérale majoritaire est vinylaromatique.

3. Composition selon la revendication 2, le polyvinylaromatique étant un homopolymère ou un copolymère styrénique.

4. Composition selon l'une quelconque des revendications 1 à 3, X étant un halogène.

5. Composition selon la revendication 4, X étant le chlore.

6. Composition selon l'une quelconque des revendications 1 à 3, X répondant à la formule OR dans laquelle R représente l'hydrogène ou un groupe hydrocarboné monovalent, linéaire ou ramifié.

7. Composition selon la revendication 6, R étant choisi parmi l'hydrogène, les alkyles, alkoxyalkyles, cycloalkyles et aryles comportant de 1 à 15 atomes de carbone.

**8.** Composition selon la revendication 7, R étant choisi parmi l'hydrogène, les alkyles en $C_1$-$C_8$; alkoxyalkyles en $C_2$-$C_8$, cycloalkyles en $C_5$-$C_{10}$ et aryles en $C_6$-$C_{12}$.

**9.** Composition selon la revendication 8, Z répondant à l'une des formules :

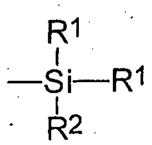 ; 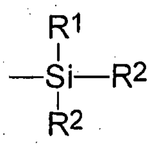 ; 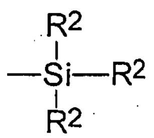 ,

dans lesquelles :

- les radicaux $R^1$, substitués ou non substitués, identiques ou différents entre eux, sont choisis dans le groupe constitué par les alkyles en $C_1$-$C_8$, les cycloalkyles en $C_5$-$C_8$ et les aryles en $C_6$-$C_{12}$ ;
- les radicaux $R^2$, substitués ou non substitués, identiques ou différents entre eux, sont choisis dans le groupe constitué par l'hydroxyle, les alkoxyles en $C_1$-$C_8$ et les cycloalkoxyles en $C_5$-$C_8$.

**10.** Composition selon la revendication 9, les radicaux $R^1$ étant choisis dans le groupe constitué par les alkyles en $C_1$-$C_4$, cyclohexyle et phényle.

**11.** Composition selon la revendication 10, les radicaux $R^1$ étant choisis dans le groupe constitué par les alkyles en $C_1$-$C_4$.

**12.** Composition selon l'une quelconque des revendications 9 à 11, les radicaux $R^2$ étant choisis dans le groupe constitué par l'hydroxyle et les alkoxyles en $C_1$-$C_6$.

**13.** Composition selon la revendication 12, les radicaux $R^2$ étant choisis dans le groupe constitué par l'hydroxyle et les alkoxyles en $C_1$-$C_4$.

**14.** Composition selon la revendication 9, les radicaux $R^1$ étant choisis parmi méthyle et éthyle et les radicaux $R^2$ étant choisis parmi hydroxyle, méthoxyle et éthoxyle.

**15.** Composition selon l'une quelconque des revendications 1 à 14, le polyvinylaromatique étant un copolymère d'une part d'au moins un premier comonomère vinylaromatique (noté comonomèxe A), et d'autre part d'au moins un second comonomère fonctionnalisé porteur de la fonction Z de formule ≡ Si - X (noté comonomère B).

**16.** Composition selon la revendication 15, le comonomère A étant un composé styrénique.

**17.** Composition selon la revendication 16, le composé styrénique étant choisi dans le groupe constitué par le styrène, l'éthylvinylbenzène, le divinylbenzène et les mélanges de tels monomères.

**18.** Composition selon l'une quelconque des revendications 15 à 17, le comonomère B étant choisi dans le groupe constitué par les acrylates et méthacrylates d'hydroxysilyl-alkyl($C_1$-$C_4$), les acrylates et méthacrylates d'alkoxy ($C_1$-$C_4$)silyl-alkyl($C_1$-$C_4$), et les mélanges de tels monomères.

**19.** Composition selon la revendication 18, le comonomère B étant choisi dans le groupe constitué par les acrylates et les méthacrylates d'hydroxy-silyl-alkyl($C_1$-$C_4$), de méthoxy-silyl-alkyl($C_1$-$C_4$), d'éthoxy-silyl-alkyl($C_1$-$C_4$) et les mélanges de tels monomères.

**20.** Composition selon la revendication 19, le comonomère B étant choisi dans le groupe constitué par les acrylates et les méthacrylates d'hydroxy-, de méthoxy-, d'éthoxy-silylpropyle, et les mélanges de tels monomères.

**21.** Composition selon la revendication 20, le comonomère B étant l'acrylate ou le méthacrylate de triméthoxysilylpropyle.

**22.** Composition selon l'une quelconque des revendications 15 à 17, le comonomère B étant choisi dans le groupe constitué par les styryl-alkyl($C_1$-$C_4$)-hydroxysilanes, les styryl-alkyl($C_1$-$C_4$)-alkoxy($C_1$-$C_4$)silanes, et les mélanges

de tels monomères.

**23.** Composition selon la revendication 22, le comonomère B étant choisi dans le groupe constitué par les styryl-alkyl ($C_1$-$C_4$)-hydroxysilanes, les styryl-alkyl($C_1$-$C_4$)-méthoxysilanes, les styryl-alkyl($C_1$-$C_4$)-éthoxysilanes et les mélanges de tels monomères.

**24.** Composition selon la revendication 23, le comonomère B étant choisi dans le groupe constitué par les styryléthylhydroxysilanes, les styryléthylméthoxysilanes, les styryléthyléthoxysilanes et les mélanges de tels monomères.

**25.** Composition selon la revendication 24, le comonomère B étant le styryléthyltriméthoxysilane.

**26.** Composition selon l'une quelconque des revendications 15 à 25, le taux molaire de comonomère B dans ledit copolymère vinylaromatique étant supérieur à 5%.

**27.** Composition selon la revendication 26, le taux molaire de comonomère B dans ledit copolymère vinylaromatique étant compris entre 5 et 30%.

**28.** Composition selon la revendication 27, le taux molaire de comonomère B dans ledit copolymère vinylaromatique étant compris entre 5 et 20%.

**29.** Composition selon l'une quelconque des revendications 1 à 28, le polyvinylaromatique étant en outre réticulé par la présence d'au moins un comonomère réticulant au moins bifonctionnel (noté comonomère C), de préférence polymérisable par réaction d'addition.

**30.** Composition selon la revendication 29, le comonomère C étant porteur d'au moins deux groupes insaturés polymérisables.

**31.** Composition selon la revendication 30, les groupes insaturés polymérisables étant des groupes éthyléniques.

**32.** Composition selon l'une quelconque des revendications 1 à 31, le polyvinylaromatique étant obtenu par polymérisation par voie radicalaire.

**33.** Composition selon l'une quelconque des revendications 29 à 32, le comonomère C étant choisi dans le groupe constitué par les di(méth)acrylates de polyols, les di(méth)acrylamides d'alkylène, les composés vinylaromatiques porteurs d'au moins deux groupements vinyliques, et les mélanges de tels comonomères.

**34.** Composition selon la revendication 33, le comonomère C étant un composé styrénique.

**35.** Composition selon la revendication 34, le composé styrénique étant choisi dans le groupe constitué par le diisopropenylbenzène, le divinylbenzène, le trivinylbenzène et les mélanges de ces comonomères.

**36.** Composition selon l'une quelconque des revendications 29 à 35, le taux pondéral de comonomère C, dans ledit polyvinylaromatique, étant supérieur à 5%.

**37.** Composition selon la revendication 36, le taux pondéral de comonomère C, dans ledit polyvinylaromatique, étant compris entre 5 et 30%.

**38.** Composition selon l'une quelconque des revendications 35 à 37, le comonomère C étant le divinylbenzène.

**39.** Composition selon la revendication 38, le polyvinylaromatique étant un copolymère de styrène, éthylvinylbenzène, divinylbenzène et (méth)acrylate de triméthoxysilylpropyle.

**40.** Composition selon la revendication 39, le taux pondéral de (méth)acrylate de triméthoxysilylpropyle étant compris entre 10 et 30%.

**41.** Composition selon la revendication 40, le taux pondéral de (méth)acrylate de triméthoxysilylpropyle étant compris entre 20 et 30%.

**42.** Composition selon l'une quelconque des revendications 1 à 41, le diamètre moyen des nanoparticules étant compris entre 10 et 100 nm.

**43.** Composition selon la revendication 42, le diamètre moyen des nanoparticules étant compris entre 10 et 60 nm.

**44.** Composition selon la revendication 43, le diamètre moyen des nanoparticules étant compris entre 10 et 40 nm.

**45.** Composition selon l'une quelconque des revendications 1 à 44, l'élastomère diénique étant choisi dans le groupe constitué par les polybutadiènes, les polyisoprènes de synthèse, le caoutchouc naturel, les copolymères de butadiène-styrène, les copolymères de butadiène-isoprène, les copolymères de butadiène-acrylonitrile, les copolymères d'isoprène-styrène, les copolymères de butadiène-styrène-isoprène et les mélanges de ces élastomères.

**46.** Composition selon l'une quelconque des revendications 1 à 45, l'agent de coupage étant un silane ou un polysiloxane au moins bifonctionnel.

**47.** Composition selon l'une quelconque des revendications 1 à 46, le taux de charge polyvinylaromatique étant compris entre 10 et 100 pce.

**48.** Composition selon la revendication 47, le taux de charge polyvinylaromatique étant compris entre 10 et 80 pce.

**49.** Composition selon la revendication 48, le taux de charge polyvinylaromatique étant compris entre 20 et 50 pce.

**50.** Procédé d'obtention d'une composition de caoutchouc dans lequel on incorpore à au moins un élastomère diénique, au moins une charge polymère, un agent de couplage assurant la liaison entre la charge polymère et l'élastomère, et en ce qu'on malaxe thermomécaniquement le tout, en une ou plusieurs étapes, jusqu'à atteindre une température maximale comprise entre 110°C et 190°C, **caractérisé en ce que** ladite charge polymère comporte des nanoparticules de polyvinylaromatique fonctionnalisé ≡ Si - X, X représentant un groupe hydroxyle ou hydrolysable.

**51.** Procédé selon la revendication 50, la charge polymère étant incorporée sous forme d'un masterbatch de ladite charge et d'au moins un élastomère diénique.

**52.** Masterbatch à base d'au moins un élastomère diénique et une charge polymère, **caractérisé en ce que** ladite charge polymère comporte des nanoparticules de polyvinylaromatique porteur d'une fonction notée Z de formule ≡ Si - X, X représentant un groupe hydroxyle ou hydrolysable.

**53.** Procédé d'obtention d'un masterbatch comportant au moins un élastomère diénique et une charge polymère, comportant les étapes suivantes :

- partir d'un latex de l'élastomère diénique et d'un latex de la charge polymère ;
- les mélanger intimement;
- faire précipiter le mélange ainsi obtenu;
- puis laver et sécher le précipité ainsi obtenu,

**caractérisé en ce que** ladite charge polymère comporte des nanoparticules de polyvinylaromatique porteur d'une fonction notée Z de formule ≡ Si - X, X représentant un groupe hydroxyle ou hydrolysable.

**54.** Utilisation d'un masterbatch selon la revendication 52 pour la fabrication d'une composition d'élastomère diénique.

**55.** Utilisation, pour la fabrication d'articles ou de produits semi-finis en caoutchouc, d'une composition de caoutchouc conforme à l'une quelconque des revendications 1 à 49.

**56.** Article ou produit semi-fini en caoutchouc comportant une composition selon l'une quelconque des revendications 1 à 49.

**57.** Article ou produit semi-fini en caoutchouc selon la revendication 56, cet article ou produit semi-fini étant choisi dans le groupe constitué par les pneumatiques, les appuis internes de sécurité pour pneumatiques, les roues, les ressorts en caoutchouc, les articulations élastomériques et autres éléments de suspension et anti-vibratoire.

**58.** Pneumatique comportant une composition de caoutchouc selon l'une quelconque des revendications 1 à 49.

**59.** Produit semi-fini pour pneumatique comportant une composition de caoutchouc conforme à l'une quelconque des revendications 1 à 49.

**60.** Produit semi-fini pour pneumatique selon la revendication 59, ce dernier étant choisi dans le groupe constitué par les bandes de roulement, les sous-couches de ces bandes de roulement, les nappes d'armature de sommet, les flancs, les nappes d'armature de carcasse, les talons, les protecteurs, les chambres à air, les gommes intérieures étanches pour pneu sans chambre, les gommes internes de renforcement de flancs et autres gommes destinées à supporter la charge en cas de roulage à plat des pneumatiques.

**Patentansprüche**

**1.** Kautschukzusammensetzung auf der Basis mindestens eines Dienelastomers, eines polymeren Füllstoffs und eines Kupplungsmittels, das die Bindung zwischen dem polymeren Füllstoff und dem Elastomer gewährleistet, **dadurch gekennzeichnet, dass** der polymere Füllstoff Nanopartikel aus Polyvinylaromat mit einer als Z bezeichneten Funktion der Formel ≡Si-X, wobei X für eine Hydroxylgruppe oder eine hydrolysierbare Gruppe steht, umfasst.

**2.** Zusammensetzung nach Anspruch 1, wobei es sich bei dem Polyvinylaromaten um ein vinylaromatisches Homopolymer oder ein Copolymer, bei dem zumindest der überwiegende Gewichtsanteil vinylaromatisch ist, handelt.

**3.** Zusammensetzung nach Anspruch 2, wobei es sich bei dem Polyvinylaromaten um ein Styrol-Homopolymer oder -Copolymer handelt.

**4.** Zusammensetzung nach einem der Ansprüche 1 bis 3, wobei X ein Halogen ist.

**5.** Zusammensetzung nach Anspruch 4, wobei X Chlor ist.

**6.** Zusammensetzung nach einem der Ansprüche 1 bis 3, wobei X der Formel OR entspricht, worin R für Wasserstoff oder eine einwertige, lineare oder verzweigte Kohlenwasserstoffgruppe steht.

**7.** Zusammensetzung nach Anspruch 6, wobei R aus Wasserstoff, Alkylgruppen, Alkoxyalkylgruppen, Cycloalkylgruppen und Arylgruppen mit 1 bis 15 Kohlenstoffatomen ausgewählt ist.

**8.** Zusammensetzung nach Anspruch 7, wobei R aus Wassertoff, $C_1$-$C_8$-Alkylgruppen, $C_2$-$C_8$-Alkoxyalkylgruppen, $C_5$-$C_{10}$-Cycloalkylgruppen und $C_6$-$C_{12}$-Arylgruppen ausgewählt ist.

**9.** Zusammensetzung nach Anspruch 8, wobei Z einer der folgenden Formeln entspricht:

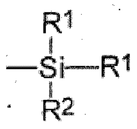
;
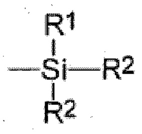
;
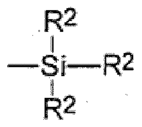
,

worin:

- die Reste $R^1$, die substituiert oder unsubstituiert und gleich oder voneinander verschieden sind, aus der Gruppe bestehend aus $C_1$-$C_8$-Alkylgruppen, $C_5$-$C_8$-Cycloalkylgruppen und $C_6$-$C_{12}$-Arylgruppen ausgewählt sind;
- die Reste $R^2$, die substituiert oder unsubstituiert und gleich oder voneinander verschieden sind, aus der Gruppe bestehend aus Hydroxyl, $C_1$-$C_8$-Alkoxygruppen und $C_5$-$C_8$-Cycloalkoxy-gruppen ausgewählt sind.

**10.** Zusammensetzung nach Anspruch 9, wobei die Reste $R^1$ aus der Gruppe bestehend aus $C_1$-$C_4$-Alkylgruppen, Cyclohexyl und Phenyl ausgewählt sind.

**11.** Zusammensetzung nach Anspruch 10, wobei die Reste $R^1$ aus der Gruppe bestehend aus $C_1$-$C_4$-Alkylgruppen

ausgewählt sind.

**12.** Zusammensetzung nach einem der Ansprüche 9 bis 11, wobei die Reste $R^2$ aus der Gruppe bestehend aus Hydroxyl und $C_1$-$C_6$-Alkoxygruppen ausgewählt sind.

**13.** Zusammensetzung nach Anspruch 12, wobei die Reste $R^2$ aus der Gruppe bestehend aus Hydroxyl und $C_1$-$C_4$-Alkoxygruppen ausgewählt sind.

**14.** Zusammensetzung nach Anspruch 9, wobei die Reste $R^1$ aus Methyl und Ethyl ausgewählt sind und die Reste $R^2$ aus Hydroxyl, Methoxy und Ethoxy ausgewählt sind.

**15.** Zusammensetzung nach einem der Ansprüche 1 bis 14, wobei es sich bei dem Polyvinylaromaten um ein Copolymer von einerseits mindestens einem vinylaromatischen ersten Comonomer (das als Comonomer A bezeichnet wird) und andererseits mindestens einem funktionalisierten zweiten Comonomer mit der Funktion Z der Formel ≡Si-X (das als Comonomer B bezeichnet wird) handelt.

**16.** Zusammensetzung nach Anspruch 15, wobei es sich bei Comonomer A um eine Styrolverbindung handelt.

**17.** Zusammensetzung nach Anspruch 16, wobei die Styrolverbindung aus der Gruppe bestehend aus Styrol, Ethylvinylbenzol, Divinylbenzol und Mischungen derartiger Monomere ausgewählt ist.

**18.** Zusammensetzung nach einem der Ansprüche 15 bis 17, wobei Comonomer B aus der Gruppe bestehend aus Hydroxysilyl($C_1$-$C_4$)alkylacrylaten und -methacrylaten, ($C_1$-$C_4$)Alkoxysilyl($C_1$-$C_4$)alkylacrylaten und -methacrylaten und Mischungen derartiger Monomere ausgewählt ist.

**19.** Zusammensetzung nach Anspruch 18, wobei Comonomer B aus der Gruppe bestehend aus Hydroxysilyl($C_1$-$C_4$) alkylacrylaten und -methacrylaten, Methoxy-silyl($C_1$-$C_4$)alkylacrylaten und -methacrylaten, Ethoxysilyl($C_1$-$C_4$)alkylacrylaten und -methacrylaten und Mischungen derartiger Monomere ausgewählt ist.

**20.** Zusammensetzung nach Anspruch 19, wobei Comonomer B aus der Gruppe bestehend aus Hydroxysilylpropylacrylaten und -methacrylaten, Methoxysilylpropylacrylaten und -methacrylaten, Ethoxysilylpropylacrylaten und -methacrylaten und Mischungen derartiger Monomere ausgewählt ist.

**21.** Zusammensetzung nach Anspruch 20, wobei es sich bei Comonomer B um Trimethoxysilylpropylacrylat oder Trimethoxysilylpropylmethacrylat handelt.

**22.** Zusammensetzung nach einem der Ansprüche 15 bis 17, wobei Comonomer B aus der Gruppe bestehend aus Styryl($C_1$-$C_4$)alkylhydroxysilanen, Styryl($C_1$-$C_4$)-alkyl($C_1$-$C_4$)alkoxysilanen und Mischungen derartiger Monomere ausgewählt ist.

**23.** Zusammensetzung nach Anspruch 22, wobei Comonomer B aus der Gruppe bestehend aus Styryl($C_1$-$C_4$)alkylhydroxysilanen, Styryl($C_1$-$C_4$)alkylmethoxysilanen, Styryl($C_1$-$C_4$)alkylethoxysilanen und Mischungen derartiger Monomere ausgewählt ist.

**24.** Zusammensetzung nach Anspruch 23, wobei Comonomer B aus der Gruppe bestehend aus Styrylethylhydroxysilanen, Styrylethylmethoxysilanen, Styrylethylethoxysilanen und Mischungen derartiger Monomere ausgewählt ist.

**25.** Zusammensetzung nach Anspruch 24, wobei es sich bei Comonomer B um Styrylethyltrimethoxysilan handelt.

**26.** Zusammensetzung nach einem der Ansprüche 15 bis 25, wobei der molare Gehalt an Comonomer B in dem vinylaromatischen Copolymer größer als 5% ist.

**27.** Zusammensetzung nach Anspruch 26, wobei der molare Gehalt an Comonomer B in dem vinylaromatischen Copolymer zwischen 5 und 30% liegt.

**28.** Zusammensetzung nach Anspruch 27, wobei der molare Gehalt an Comonomer B in dem vinylaromatischen Copolymer zwischen 5 und 20% liegt.

**29.** Zusammensetzung nach einem der Ansprüche 1 bis 28, wobei der Polyvinylaromat ferner durch das Vorliegen mindestens eines bifunktionellen vernetzenden Comonomers (das als Comonomer C bezeichnet wird), das vorzugsweise durch eine Additionsreaktion polymerisierbar ist, vernetzt ist.

**30.** Zusammensetzung nach Anspruch 29, wobei das Comonomer C mindestens zwei polymerisierbare ungesättigte Gruppen trägt.

**31.** Zusammensetzung nach Anspruch 30, wobei es sich bei den polymerisierbaren ungesättigten Gruppen um ethylenische Gruppen handelt.

**32.** Zusammensetzung nach einem der Ansprüche 1 bis 31, wobei der Polyvinylaromat durch Radikalpolymerisation erhalten wird.

**33.** Zusammensetzung nach einem der Ansprüche 29 bis 32, wobei Comonomer C aus der Gruppe bestehend aus Di(meth)acrylaten von Polyolen, Alkylen-di(meth)acrylamiden, vinylaromatischen Verbindungen mit mindestens zwei Vinylgruppen und Mischungen derartiger Comonomere ausgewählt ist.

**34.** Zusammensetzung nach Anspruch 33, wobei es sich bei Comonomer C um eine Styrolverbindung handelt.

**35.** Zusammensetzung nach Anspruch 34, wobei die Styrolverbindung aus der Gruppe bestehend aus Diisopropenylbenzol, Divinylbenzol, Trivinylbenzol und Mischungen dieser Comonomere ausgewählt ist.

**36.** Zusammensetzung nach einem der Ansprüche 29 bis 35, wobei der Gewichtsgehalt an Comonomer C in dem Polyvinylaromaten größer als 5% ist.

**37.** Zusammensetzung nach Anspruch 36, wobei der Gewichtsgehalt an Comonomer C in dem Polyvinylaromaten zwischen 5 und 30% liegt.

**38.** Zusammensetzung nach einem der Ansprüche 35 bis 37, wobei es sich bei Comonomer C um Divinylbenzol handelt.

**39.** Zusammensetzung nach Anspruch 38, wobei es sich bei dem Polyvinylaromaten um ein Copolymer von Styrol, Ethylvinylbenzol, Divinylbenzol und Trimethoxysilylpropyl(meth)acrylat handelt.

**40.** Zusammensetzung nach Anspruch 39, wobei der Gewichtsgehalt an Trimethoxysilylpropyl(meth)-acrylat zwischen 10 und 30% liegt.

**41.** Zusammensetzung nach Anspruch 40, wobei der Gewichtsgehalt an Trimethoxysilylpropyl(meth)-acrylat zwischen 20 und 30% liegt.

**42.** Zusammensetzung nach einem der Ansprüche 1 bis 41, wobei der mittlere Durchmesser der Nanopartikel zwischen 10 und 100 nm liegt.

**43.** Zusammensetzung nach Anspruch 42, wobei der mittlere Durchmesser der Nanopartikel zwischen 10 und 60 nm liegt.

**44.** Zusammensetzung nach Anspruch 43, wobei der mittlere Durchmesser der Nanopartikel zwischen 10 und 40 nm liegt.

**45.** Zusammensetzung nach einem der Ansprüche 1 bis 44, wobei das Dienelastomer aus der Gruppe bestehend aus Polybutadienen, synthetischen Polyisoprenen, Naturkautschuk, Butadien-Styrol-Copolymeren, Butadien-Isopren-Copolymeren, Butadien-Acrylnitril-Copolymeren, Isoprene-Styrol-Copolymeren, Butadien-Styrol-Isopren-Copolymeren und Mischungen dieser Elastomere ausgewählt ist.

**46.** Zusammensetzung nach einem der Ansprüche 1 bis 45, wobei es sich bei dem Kupplungsmittel um ein mindestens bifunktionelles Silan oder Polysiloxan handelt.

**47.** Zusammensetzung nach einem der Ansprüche 1 bis 46, wobei der Gehalt an polyvinylaromatischem Füllstoff zwischen 10 und 100 phe liegt.

**48.** Zusammensetzung nach Anspruch 47, wobei der Gehalt an polyvinylaromatischem Füllstoff zwischen 10 und 80 phe liegt.

**49.** Zusammensetzung nach Anspruch 48, wobei der Gehalt an polyvinylaromatischem Füllstoff zwischen 20 und 50 phe liegt.

**50.** Verfahren zum Erhalt einer Kautschukzusammensetzung, bei dem man mindestens ein Dienelastomer, mindestens einen polymeren Füllstoff und ein Kupplungsmittel, das die Bindung zwischen dem polymeren Füllstoff und dem Elastomer gewährleistet, einarbeitet und das Ganze in einem oder mehreren Schritten thermomechanisch knetet, bis eine Höchsttemperatur zwischen 110°C und 190°C erreicht ist, **dadurch gekennzeichnet, dass** der polymere Füllstoff Nanopartikel aus mit ≡Si-X funktionalisiertem Polyvinylaromat, wobei X für eine Hydroxylgruppe oder einen hydrolysierbare Gruppe steht, umfasst.

**51.** Verfahren nach Anspruch 50, wobei der polymere Füllstoff in Form eines Masterbatch des Füllstoffs und mindestens eines Dienelastomers eingearbeitet wird.

**52.** Masterbatch auf Basis mindestens eines Dienelastomers und eines polymeren Füllstoffs, **dadurch gekennzeichnet, dass** der polymere Füllstoff Nanopartikel aus Polyvinylaromat mit einer als Z bezeichneten Funktion der Formel ≡Si-X, wobei X für eine Hydroxylgruppe oder eine hydrolysierbare Gruppe steht, umfasst.

**53.** Verfahren zum Erhalt eines Masterbatch, der mindestens ein Dienelastomer und einen polymeren Füllstoff umfasst, bei dem man:

- von einem Dienelastomerlatex und einem Latex des polymeren Füllstoffs ausgeht;
- die Latices innig mischt;
- die so erhaltene Mischung fällt; und
- den so erhaltenen Niederschlag dann wäscht und trocknet,

**dadurch gekennzeichnet, dass** der polymere Füllstoff Nanopartikel aus Polyvinylaromat mit einer als Z bezeichneten Funktion der Formel =Si-X, wobei X für eine Hydroxylgruppe oder eine hydrolysierbare Gruppe steht, umfasst.

**54.** Verwendung eines Masterbatch nach Anspruch 52 zur Herstellung einer Dienelastomerzusammensetzung.

**55.** Verwendung einer Kautschukzusammensetzung nach einem der Ansprüche 1 bis 49 zur Herstellung von Gegenständen oder Halbzeugen aus Kautschuk.

**56.** Gegenstand oder Halbzeug aus Kautschuk, umfassend eine Zusammensetzung nach einem der Ansprüche 1 bis 49.

**57.** Gegenstand oder Halbzeug aus Kautschuk nach Anspruch 56, wobei dieser Gegenstand bzw. dieses Halbzeug aus der Gruppe bestehend aus Reifen, inneren Notlaufstützen für Reifen, Rädern, Kautschukfedern, Elastomergelenken und anderen Aufhängungselementen und schwingungsdämpfenden Elementen ausgewählt ist.

**58.** Reifen, umfassend eine Kautschukzusammensetzung nach einem der Ansprüche 1 bis 49.

**59.** Halbzeug für einen Reifen, umfassend eine Kautschukzusammensetzung nach einer Ansprüche 1 bis 49.

**60.** Halbzeug für einen Reifen nach Anspruch 59, wobei das Halbzeug aus der Gruppe bestehend aus Laufflächen, Unterschichten für diese Laufflächen, Scheitelbewehrungslagen, Seitenwänden, Karkassenbewehrungslagen, Wülsten, Protektoren, Schläuchen, undurchlässigen Innenseelen für schlauchlose Reifen, Seitenwandverstärkungsinnenseelen und anderen Mischungen zum Tragen der Last im Fall des Fahrens mit platten Reifen.

## Claims

**1.** A rubber composition based on at least a diene elastomer, a polymeric filler and a coupling agent for bonding between the polymeric filler and the elastomer, **characterized in that** said polymeric filler comprises nanoparticles of a polyvinylaromatic carrying a functional group denoted by Z of formula ≡ Si - X, X representing a hydroxyl or hydrolyzable group.

**2.** The composition according to claim 1, the polyvinylaromatic being a vinylaromatic homopolymer or a copolymer at least the predominant fraction by weight of which is vinylaromatic.

**3.** The composition according to claim 2, the polyvinylaromatic being a styrene homopolymer or copolymer.

**4.** The composition according to any one of claims 1 to 3, X being a halogen.

**5.** The composition according to claim 4, X being chlorine.

**6.** The composition according to any one of claims 1 to 3, X satisfying the formula OR in which R represents hydrogen or a monovalent, linear or branched, hydrocarbon group.

**7.** The composition according to claim 6, R being chosen from hydrogen, alkyls, alkoxyalkyls, cycloalkyls and aryls containing 1 to 15 carbon atoms.

**8.** The composition according to claim 7, R being chosen from hydrogen, $C_1$-$C_8$ alkyls, $C_2$-$C_8$ alkoxyalkyls, $C_5$-$C_{10}$ cycloalkyls and $C_6$-$C_{12}$ aryls.

**9.** The composition according to claim 8, Z satisfying one of the formulae:

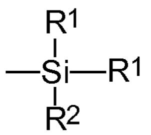 ; 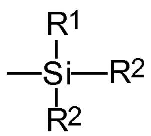 ; 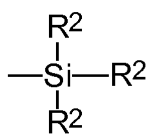 ,

in which:

- the radicals $R^1$, which are substituted or unsubstituted, identical or different, are chosen from the group consisting of $C_1$-$C_8$ alkyls, $C_5$-$C_8$ cycloalkyls and $C_6$-$C_{12}$ aryls; and
- the radicals $R^2$, which are substituted or unsubstituted, identical or different, are chosen from the group consisting of hydroxyl, $C_1$-$C_8$ alkoxyls and $C_5$-$C_8$ cycloalkoxyls.

**10.** The composition according to claim 9, the radicals $R^1$ being chosen from the group consisting of $C_1$-$C_4$ alkyls, cyclohexyl and phenyl.

**11.** The composition according to claim 10, the radical $R^1$ being chosen from the group consisting of $C_1$-$C_4$ alkyls.

**12.** The composition according to any one of claims 9 to 11, the radicals $R^2$ being chosen from the group consisting of hydroxyl and $C_1$-$C_6$ alkoxyls.

**13.** The composition according to claim 12, the radicals $R^2$ being chosen from the group consisting of hydroxyl and $C_1$-$C_4$ alkoxyls.

**14.** The composition according to claim 9, the radicals $R^1$ being chosen from methyl and ethyl, and the radicals $R^2$ being chosen from hydroxyl, methoxyl and ethoxyl.

**15.** The composition according to any one of claims 1 to 14, the polyvinylaromatic being a copolymer of, on the one hand, at least a vinylaromatic first comonomer (denoted comonomer A) and, on the other hand, at least a functionalized second comonomer carrying the functional group Z of formula ≡ Si - X (denoted comonomer B).

**16.** The composition according to claim 15, comonomer A being a styrene compound.

**17.** The composition according to claim 16, the styrene compound being chosen from the group consisting of styrene, ethylvinylbenzene, divinylbenzene and mixtures of such monomers.

**18.** The composition according to any one of claims 15 to 17, comonomer B being chosen from the group consisting of hydroxysilyl($C_1$-$C_4$)alkyl acrylates and methacrylates, ($C_1$-$C_4$)alkoxysilyl($C_1$-$C_4$)alkyl acrylates and methacrylates

and mixtures of such monomers.

**19.** The composition according to claim 18, comonomer B being chosen from the group consisting of hydroxysilyl($C_1$-$C_4$)alkyl acrylates and methacrylates, methoxysilyl($C_1$-$C_4$)alkyl acrylates and methacrylates, ethoxysilyl($C_1$-$C_4$)alkyl acrylates and methacrylates and mixtures of such monomers.

**20.** The composition according to claim 19, comonomer B being chosen from the group consisting of hydroxysilylpropyl acrylates and methacrylates, methoxysilylpropyl acrylates and methacrylates, ethoxysilylpropyl acrylates and methacrylates, and mixtures of such monomers.

**21.** The composition according to claim 20, comonomer B being trimethoxysilylpropyl acrylate or trimethoxysilylpropyl methacrylate.

**22.** The composition according to any one of claims 15 to 17, comonomer B being chosen from the group consisting of styryl($C_1$-$C_4$)alkylhydroxysilanes, styryl($C_1$-$C_4$)alkyl($C_1$-$C_4$)alkoxysilanes and mixtures of such monomers.

**23.** The composition according to claim 22, comonomer B being chosen from the group consisting of styryl($C_1$-$C_4$)alkylhydroxysilanes, styryl($C_1$-$C_4$)alkylmethoxysilanes, styryl($C_1$-$C_4$)alkylethoxysilanes and mixtures of such monomers.

**24.** The composition according to claim 23, comonomer B being chosen from the group consisting of styrylethylhydroxysilanes, styrylethylmethoxysilanes, styrylethylethoxysilanes and mixtures of such monomers.

**25.** The composition according to claim 24, comonomer B being styrylethyltrimethoxysilane.

**26.** The composition according to any one of claims 15 to 25, the molar content of comonomer B in said vinylaromatic copolymer being greater than 5%.

**27.** The composition according to claim 26, the molar content of comonomer B in said vinylaromatic copolymer being between 5 and 30%.

**28.** The composition according to claim 27, the molar content of comonomer B in said vinylaromatic copolymer being between 5 and 20%.

**29.** The composition according to any one of claims 1 to 28, the polyvinylaromatic being furthermore crosslinked by the presence of at least one at least difunctional crosslinking comonomer (called comonomer C), preferably one that is polymerizable by an addition reaction.

**30.** The composition according to claim 29, comonomer C carrying at least two polymerizable unsaturated groups.

**31.** The composition according to claim 30, the polymerizable unsaturated groups being ethylenic groups.

**32.** The composition according to any one of claims 1 to 31, the polyvinylaromatic being obtained by radical polymerization.

**33.** The composition according to any one of claims 29 to 32, comonomer C being chosen from the group consisting of di(meth)acrylates of polyols, alkylene di(meth)acrylamides, vinylaromatic compounds carrying at least two vinyl groups, and mixtures of such comonomers.

**34.** The composition according to claim 33, comonomer C being a styrene compound.

**35.** The composition according to claim 34, the styrene compound being chosen from the group consisting of diisopropenylbenzene, divinylbenzene, trivinylbenzene and mixtures of these comonomers.

**36.** The composition according to any one of claims 29 to 35, the weight content of comonomer C in said polyvinylaromatic being greater than 5%.

**37.** The composition according to claim 36, the weight content of comonomer C in said polyvinylaromatic being between

5 and 30%.

**38.** The composition according to any one of claims 35 to 37, comonomer C being divinylbenzene.

**39.** The composition according to claim 38, the polyvinylaromatic being a copolymer of styrene, ethylvinylbenzene, divinylbenzene and trimethoxysilylpropyl(meth)acrylate.

**40.** The composition according to claim 39, the weight content of trimethoxysilylpropyl(meth)acrylate being between 10 and 30%.

**41.** The composition according to claim 40, the weight content of trimethoxysilylpropyl(meth)acrylate being between 20 and 30%.

**42.** The composition according to any one of claims 1 to 41, the mean diameter of the nanoparticles being between 10 and 100 nm.

**43.** The composition according to claim 42, the mean diameter of the nanoparticles being between 10 and 60 nm.

**44.** The composition according to claim 43, the mean diameter of the nanoparticles being between 10 and 40 nm.

**45.** The composition according to any one of claims 1 to 44, the diene elastomer being chosen from the group consisting of polybutadienes, synthetic polyisoprenes, natural rubber, butadiene-styrene copolymers, butadiene-isoprene copolymers, butadiene-acrylonitrile copolymers, isoprene-styrene copolymers, butadiene-styrene-isoprene copolymers and blends of these elastomers.

**46.** The composition according to any one of claims 1 to 45, the coupling agent being an at least difunctional silane or polysiloxane.

**47.** The composition according to any one of claims 1 to 46, the polyvinylaromatic filler content being between 10 and 100 phr.

**48.** The composition according to claim 47, the polyvinylaromatic filler content being between 10 and 80 phr.

**49.** The composition according to claim 48, the polyvinylaromatic filler content being between 20 and 50 phr.

**50.** A process for obtaining a rubber composition, in which at least one diene elastomer, at least one polymeric filler and a coupling agent for bonding between the polymeric filler and the elastomer are incorporated and in that these are all thermomechanically mixed, in one or more steps, until a maximum temperature between 110°C and 190°C is reached, **characterized in that** said polymeric filler comprises nanoparticles of a polyvinylaromatic functionalized with ≡ Si - X, X representing a hydroxyl or hydrolyzable group.

**51.** The process according to claim 50, the polymeric filler being incorporated in the form of a masterbatch of said filler and at least one diene elastomer.

**52.** A masterbatch based on at least one diene elastomer and a polymeric filler, **characterized in that** said polymeric filler comprises nanoparticles of a polyvinylaromatic carrying a functional group denoted by Z of formula ≡ Si - X, X representing a hydroxyl or hydrolyzable group.

**53.** A process for obtaining a masterbatch comprising at least a diene elastomer and a polymeric filler, comprising the following steps:

- a latex of the diene elastomer and a latex of the polymeric filler are initially obtained;
- the latices are intimately mixed;
- the mixture thus obtained is precipitated; and
- the precipitate thus obtained is then washed and dried,

**characterized in that** said polymeric filler comprises nanoparticles of a polyvinylaromatic carrying a functional group denoted by Z of formula ≡ Si - X, X representing a hydroxyl or hydrolyzable group.

**54.** The use of a masterbatch according to claim 52 for the production of a diene elastomer composition.

**55.** The use, for the manufacture of articles or semi-finished products made of rubber, of a rubber composition according to any one of claims 1 to 49.

**56.** An article or semi-finished product made of rubber comprising a composition according to any one of claims 1 to 49.

**57.** The rubber article or semi-finished product according to claim 56, this article or semi-finished product being chosen from the group consisting of tires, internal safety supports for tires, wheels, rubber springs, elastomeric articulations and other suspension and antivibration elements.

**58.** A tire comprising a rubber composition according to any one of claims 1 to 49.

**59.** A semi-finished product for a tire, comprising a rubber composition according to any one of claims 1 to 49.

**60.** The semi-finished product for a tire according to claim 59, said semi-finished product being chosen from the group consisting of treads, underlayers for these treads, crown reinforcement plies, sidewalls, carcass reinforcement plies, beads, protectors, inner tubes, airtight internal rubber compounds for tubeless tires, internal rubber compounds for reinforcing sidewalls, and other rubber compounds intended for supporting the load in the case of running with flat tires.

Fig. 1

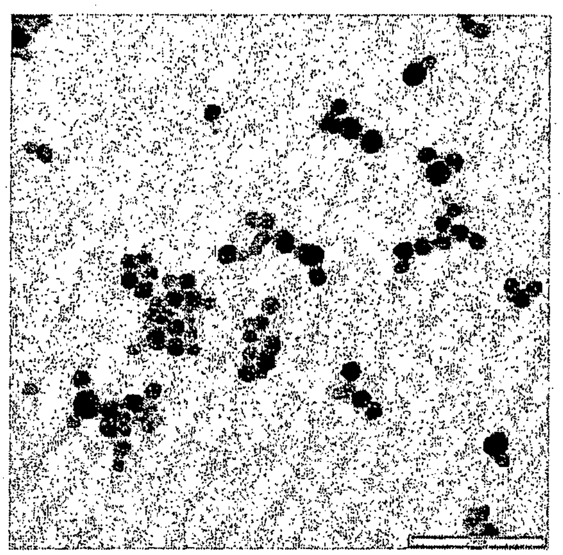

Fig. 2

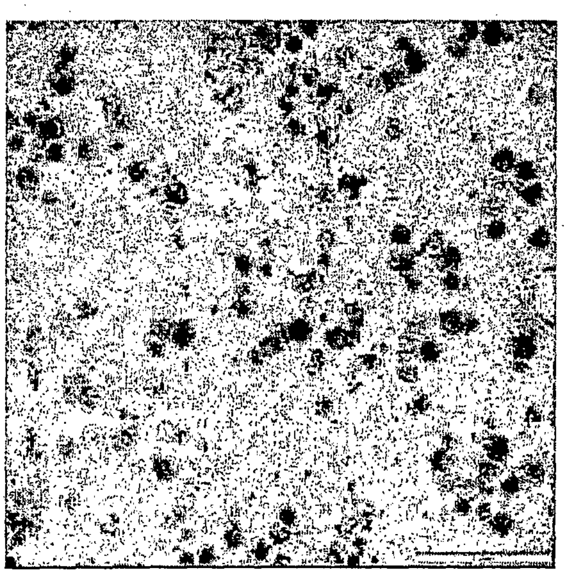

# Fig. 3

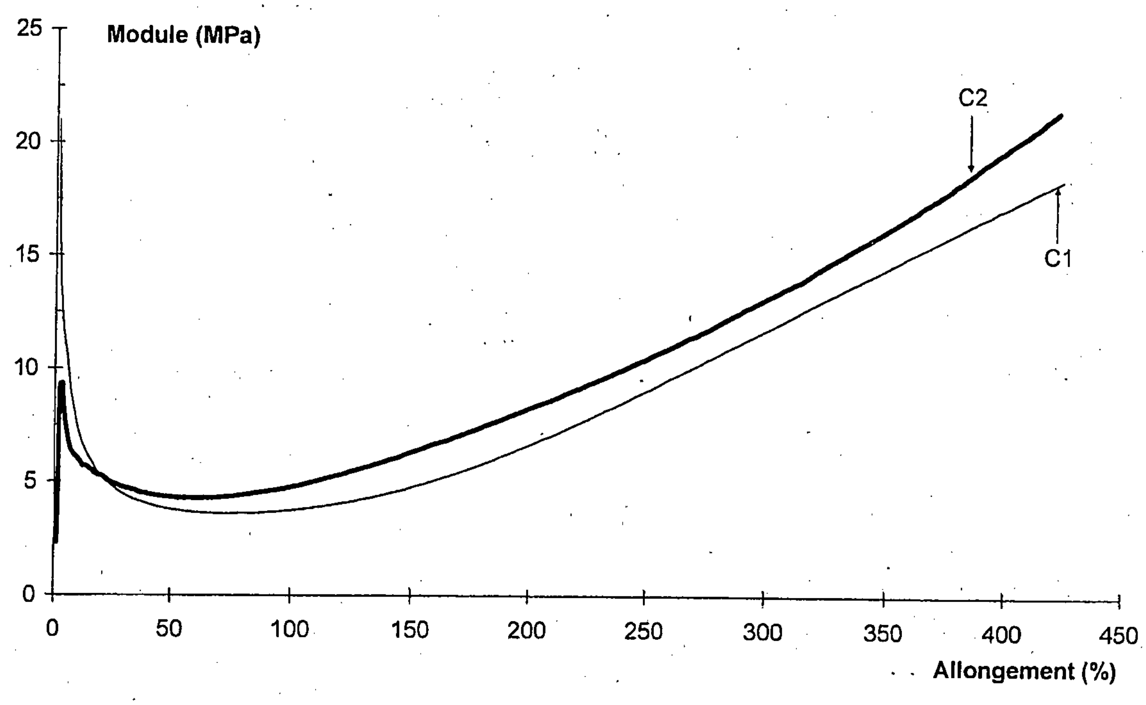
Module (MPa)
25
20
15
10
5
0
0
50
100
150
200
250
300
350
400
450
Allongement (%)
C2
C1

**Fig. 4**

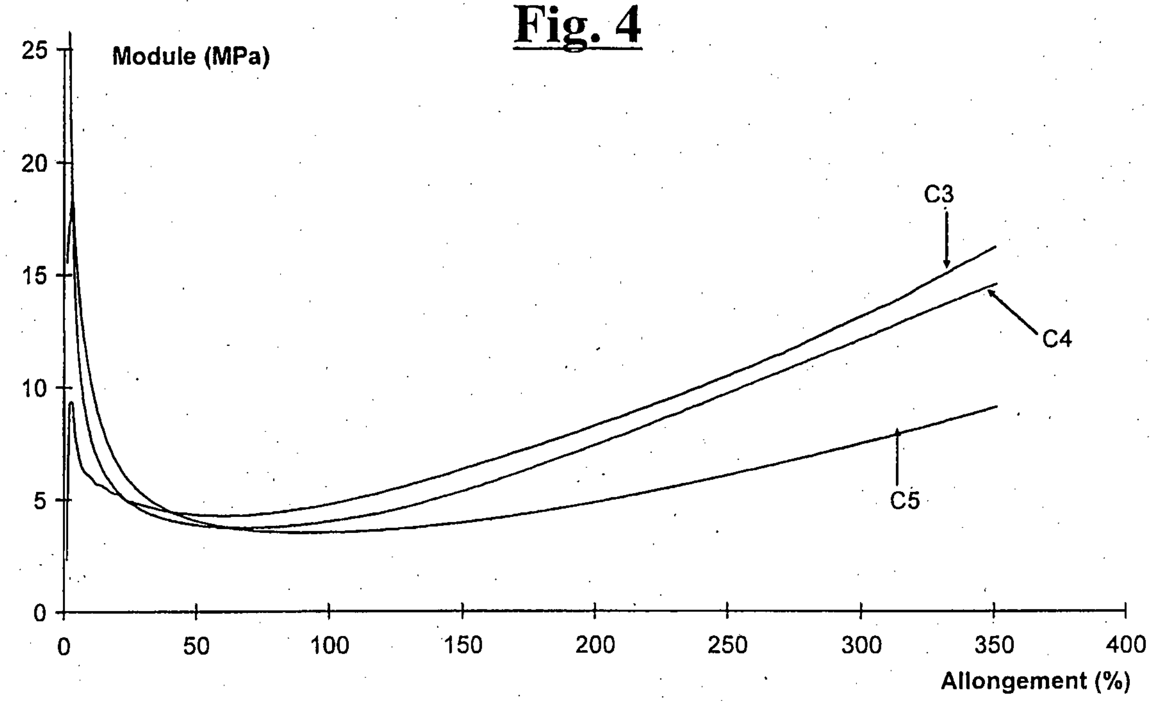
Module (MPa)
25
20
15
10
5
0
C3
C4
C5
0
50
100
150
200
250
300
350
400
Allongement (%)

**Fig. 5**

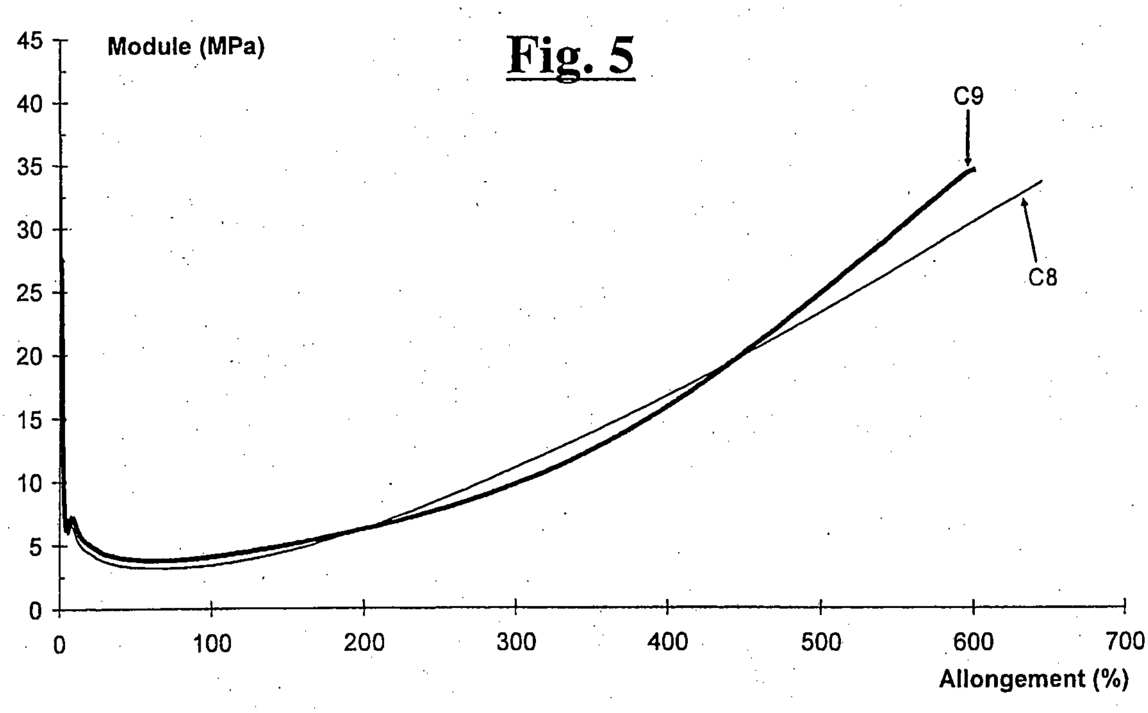
Module (MPa)
45
40
35
30
25
20
15
10
5
0
C9
C8
0
100
200
300
400
500
600
700
Allongement (%)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 03016387 A
- WO 03002648 A
- WO 03002649 A
- WO 02083782 A
- WO 0230939 A
- WO 0231041 A
- EP 1063259 A
- US 6399706 B

### Littérature non-brevet citée dans la description

- *Macromolecules,* 2001, vol. 34, 5737
- *Macromolecules,* 2002, vol. 35, 6185
- *Polymer,* 2000, vol. 41, 481